(19) Europäisches Patentamt
European Patent Office
Office européen des brevets

(11) **EP 4 703 144 A1**

(12) **EUROPEAN PATENT APPLICATION**
published in accordance with Art. 153(4) EPC

(43) Date of publication:
**04.03.2026 Bulletin 2026/10**

(21) Application number: **24796958.7**

(22) Date of filing: **22.04.2024**

(51) International Patent Classification (IPC):
**B41M 5/00** *(2006.01)*    **B41J 2/01** *(2006.01)*
**B41J 2/18** *(2006.01)*    **C09D 11/322** *(2014.01)*
**C09D 11/54** *(2014.01)*

(52) Cooperative Patent Classification (CPC):
**B41J 2/01; B41J 2/18; B41M 5/00; C09D 11/322;
C09D 11/54**

(86) International application number:
**PCT/JP2024/015692**

(87) International publication number:
**WO 2024/225212 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.04.2023 JP 2023072102**

(71) Applicant: **KONICA MINOLTA, INC.
Tokyo 100-7015 (JP)**

(72) Inventor: **OMATA, Takenori
Tokyo 100-7015 (JP)**

(74) Representative: **Gille Hrabal
Partnerschaftsgesellschaft mbB
Patentanwälte
Brucknerstraße 20
40593 Düsseldorf (DE)**

(54) **IMAGE FORMING METHOD AND IMAGE FORMING SYSTEM**

(57) The present invention addresses the problem of providing an image forming method and an image forming system that can achieve both rapid drying and injection stability of ink, and that do not damage a base material. This image forming method is characterized by comprising a step of discharging and applying, onto a base material, a first ink and a second ink containing at least one of a pigment, an inorganic particle, an organic particle and a resin, water, and a water-soluble solvent, and at least one drying step of drying a coating film by microwave irradiation, wherein a complex dielectric constant $\varepsilon''2$ of the second ink at a drying rate of 95% is larger than a complex dielectric constant $\varepsilon''1$ of the first ink at a drying rate of 95%, and a drying rate D1 when the first ink is dried at 80°C for 20 seconds is larger than a drying rate D2 when the second ink is dried at 80°C for 20 seconds.

# FIG. 1

EP 4 703 144 A1

## Description

Technical Field

The present invention relates to an image forming method and an image forming system. More specifically, the present invention relates to an image forming method capable of achieving both high-speed drying and ejection stability of an ink without damaging a base material, and the like.

Background Art

In recent years, there has been a strong demand for increasing the speed of printing of flexible packaging and labels, but conventional methods of heating the atmosphere, for example, a method of applying hot air or a method of heating with an infrared heater cannot apply such an amount of heat as to cause much damage to the base material because not only the ink but also the base material is heated at the same time.

In addition, in order to improve the ejection stability of the ink, it is necessary to contain a large amount of a moisturizer having a high boiling point in the ink in order to prevent the ink from drying and adhering to the head nozzles, but due to this, a larger amount of heat is required for drying the ink, and there is no choice but to lengthen the drying time with a limited amount of heat or to print at a low speed. Therefore, the drying properties and the ejection stability of the ink are in a trade-off relation.

As another method of heating and drying the entire ink, for example, a method of irradiating a water-based ink which does not contain a resin with microwaves as in techniques disclosed in Patent Document 1 and Patent Document 2 is exemplified.

The method of irradiating with microwaves is a method of heating an object to be dried by allowing microwaves to directly act on only a substance having a microwave absorptivity, and therefore is a drying method with high directivity that can dry only the object to be dried. This is a method in which the ink can be directly heated without heating the base material, and an output necessary for high-speed drying can be applied without worrying about damaging the base material.

However, in the techniques disclosed in Patent Document 1 and Patent Document 2 described above, usually in inkjet printing, a plurality of inks such as YMCKW are ejected at the same time and collectively dried, but such a method has a problem in that damage to the base material occurs due to insufficient drying or excessive drying depending on the drying properties of the ink materials.

Patent Document 3 discloses a technique in which an ink containing carbon black having high conductivity and a resin is combined with a dielectric heating method to prevent sparks and perform drying control. However, since approaches from other viewpoints can be considered for drying control, there is still room for improvement.

Citation List

Patent Literature

Patent Document 1: Japanese Unexamined Patent Publication No. H 5-278259
Patent Document 2: Japanese Unexamined Patent Publication No. 2022-147052
Patent Document 3: Japanese Unexamined Patent Publication No. 2019-151071

Summary of Invention

Technical Problem

The present invention has been made in consideration of the above-described problems and circumstances, and its problem to be solved is to provide an image forming method and an image forming system which can achieve both high-speed drying and ejection stability of the ink without damaging a base material.

Solution to Problem

In order to solve the above-described problem, the present inventor has studied the causes of the above-described problem and the like, and as a result, has found that the above-described problem can be solved by irradiating a first ink and a second ink, in which the complex dielectric constant and the drying rate are controlled within certain specific ranges, with microwaves, thereby completing the present invention.

That is, the above problem according to the present invention is solved by the following means.

1. An image forming method comprising an applying step and a drying step of an ink, wherein; the ink contains at least one or more of a pigment, inorganic particles, organic particles, and a resin, and water and a water-soluble solvent; the ink applying step is a step of ejecting and applying at least a first ink and a second ink onto a base material; at least one drying step of the drying step is a step of drying a coating film by irradiating it with microwaves; when complex dielectric constants of the first ink and the second ink at a drying rate of 95% are defined as $\varepsilon''1$ and $\varepsilon''2$, respectively, the $\varepsilon''1$ and $\varepsilon''2$ satisfy the following formula (1): $\varepsilon''1 < \varepsilon''2$, and when the drying rates of the first ink and the second ink dried at 80°C for 20 seconds are defined as D1 and D2, respectively, the D1 and D2 satisfy the following formula (2): $D2 < D1$.

2. The image forming method according to the item 1, wherein the complex dielectric constant $\varepsilon''1$ of the first ink and the complex dielectric constant $\varepsilon''2$ of the second ink satisfy the following formula (3): $(\varepsilon''2/\varepsilon''1) < 20$.

3. The image forming method according to the item 1, wherein the water-soluble solvent contains a moisturizer having a boiling point of 200°C or higher; the content of the moisturizer is in a range of 3% by mass to 20% by mass with respect to the first ink or the second ink; and when the first ink or the second ink is irradiated with the microwaves at a frequency 2.45 GHz, the complex dielectric constant $\varepsilon''$ at 25°C is in a range of 13 to 60.0.

4. the image forming method according to the item 3, wherein the content of the moisturizer is larger in the second ink than in the first ink.

5. The image forming method according to the item 1, wherein the ink contains a surfactant having a hydroxy group.

6. The image forming method according to the item 1, wherein the ink contains a surfactant having a diol structure.

7. The image forming method according to the item 1, wherein the base material is a resin film.

8. The image forming method according to the item 1, wherein, in the applying step of the ink, an inkjet head having a water-repellent film is used, and contact angles of the first ink and the second ink with respect to the water-repellent film are in a range of 60 to 80 at 25°C.

9. The image forming method according to the item 1, comprising an applying step of a precoat liquid before the applying step of the ink.

10. The image forming method according to the item 8, wherein the inkjet head comprises a nozzle circulation mechanism.

11. The image forming method according to the item 10, wherein: the inkjet head includes at least one pressure chamber into which an ink is injected, a pressure generating unit which generates a pressure fluctuation of the pressure chamber, a nozzle which communicates with the pressure chamber and serve as a channel of the ink ejected from the pressure chamber to the outside by pressure fluctuation in the pressure chamber, and a circulation path which communicates with the pressure chamber and discharges the ink inside the nozzle and returns the ink to an injection path to the pressure chamber, and wherein there are two or more of the circulation paths.

12. The image forming method according to the item 1, wherein, in the drying step by irradiation with microwaves, applied matters of the first ink and the second ink are dried by blowing air at 100°C or lower.

13. An image forming system comprising an applying means and a drying means of an ink, wherein: the ink contains at least one or more of a pigment, inorganic particles, organic particles, and a resin, and water and a water-soluble solvent; the ink applying means is a means for ejecting and applying at least a first ink and a second ink onto a base material; at least one drying means of the drying means is a means of drying a coating film by irradiating it with microwaves; when complex dielectric constants of the first ink and the second ink at a drying rate of 95% are defined as $\varepsilon''1$ and $\varepsilon''2$, respectively, the $\varepsilon''1$ and $\varepsilon''2$ satisfy the following formula (1): $\varepsilon''1 < \varepsilon''2$, when the drying rates of the first ink and the second ink dried at 80°C for 20 seconds are defined as D1 and D2, respectively, the D1 and D2 satisfy the following (2): $D2 < D1$.

Advantageous Effects of Invention

By the above-described means of the present invention, it is possible to provide an image forming method and an image forming system which can achieve both high-speed drying and ejection stability of the ink without damaging a base material.

The expression mechanism or action mechanism of the effect of the present invention is not clear, but it is presumed as follows.

The image forming method of the present invention can achieve both high-speed drying and ejection stability of the ink at the time of image formation by irradiating a first ink and a second ink, in which the complex dielectric constant and the drying rate are controlled within certain specific ranges, with microwaves, and does not cause damage to the base material.

As described above, in the conventional art, drying control during image formation has been performed by warming the atmosphere or irradiating microwaves. However, there have been problems such as an inability to eliminate the trade-off relation between the drying property and the ejection stability of the ink, and image defects such as roughness of the surface of the ink coating film and damage to the base material due to excessive drying of a part of the ink over time.

In the image forming method of the present invention, the ink is dried mainly by highly directional microwave irradiation, and anything other than an object to be dried is not directly heated, and therefore, the base material is not damaged.

Furthermore, the temperature of the atmosphere does not have to be excessively increased during drying of the ink, and the ink does not dry at the nozzle portion of the head during ink ejection, thereby not causing a reduction in the ejection property. In addition, since the base material is also not heated, the ink ejection section is not warmed by the heated base material, and the ejection property is not reduced.

However, it has been found that there is no significant difference in the microwave absorptivity of an image formed by a plurality of kinds of ink in the early drying stage in which the inks have not yet dried, but there is a difference in the microwave absorptivity of each ink in the later drying stage in which the inks have dried more. In the later drying stage, there is a large difference depending on the color of the ink or the type of the solid content such as a resin. Therefore, when the time for drying by irradiation with microwaves becomes long, a part of the ink is excessively dried, the surface of the coating film formed by the ink becomes rough, or the base material is damaged. As described above, it has been found that the difference in microwave absorptivity in the later drying stage leads to insufficient drying or damage to the base material in collectively drying.

Therefore, since the microwave absorptivity, which varies depending on the color of each ink and the type of the solid content such as a resin, is controlled by setting the complex dielectric constants of the first ink and the second ink within a specific range, and the drying rate is also taken into consideration, uniform drying control with quick-drying property can be performed, and thus it is presumed that a high-quality image can be formed.

That is, by performing the drying by the irradiation of the microwave which directly acts on the ink and does not heat the base material or the atmosphere, a state in which both the high-speed drying and the ejection property can be achieved is obtained. However, on the other hand, even by performing the drying by the irradiation of the microwave, in a form in which a plurality of colors are printed and dried at the same time, in particular, the drying properties are greatly different due to the difference in the microwave absorptivity in the later drying stage of each ink.

Therefore, when the ink is collectively dried with microwaves without any consideration, disadvantages such as damage to the base material due to excessive drying of a part of the ink in the later drying stage and insufficient drying occur.

From this, it is presumed that in the present invention, by controlling the drying properties of each ink according to the complex dielectric constant in consideration of the difference in the microwave absorptivity in the later drying stage, this problem can be solved and a high-quality image can be formed.

Brief Description of Drawings

[FIG. 1] This is a schematic diagram of an example of a recording apparatus preferable for the present invention.
[FIG. 2A] This is a conceptual diagram showing a state in which the ink is drawn into the pressure chamber in the maintenance operation of a circulation type inkjet head H.
[FIG. 2B] This is a conceptual diagram showing a state in which menisci formed by the ink are returned in the maintenance operation of a circulation type inkjet head.
[FIG. 3] This is an example of an image pattern of a solid area.
[FIG. 4] This is an example of an image pattern in which solid areas are individually drawn.

Description of Embodiments

The image forming method of the present invention is an image forming method having an applying step and a drying step of an ink, wherein the ink contains at least one or more of a pigment, inorganic particles, organic particles, and a resin, and water and a water-soluble solvent, the applying step of the ink is a step of ejecting and applying at least a first ink and a second ink onto a base material, at least one drying step of the drying step is a step of drying a coating film by irradiating it with microwaves, when the complex dielectric constants of the first ink and the second ink at a drying rate of 95% are defined as $\varepsilon''1$ and $\varepsilon''2$, respectively, the $\varepsilon''1$ and $\varepsilon''2$ satisfy the formula (1), and when the drying rates of the first ink and the second ink dried at 80°C for 20 seconds are defined as D1 and D2, respectively, the D1 and the D2 satisfy the formula (2). This feature is a technical feature common to or corresponding to the following embodiments.

In an embodiment of the present invention, it is preferred that the complex dielectric constant $\varepsilon''1$ of the first ink and the complex dielectric constant $\varepsilon''2$ of the second ink satisfy the formula (3) from the viewpoint of uniform drying control.

It is preferable that the water-soluble solvent contains a moisturizer having a boiling point of 200°C or higher, the content of the moisturizer is in a range of 3 to 20% by mass with respect to the first ink or the second ink, and the complex dielectric constant $\varepsilon''$ at 25°C when the first ink or the second ink is irradiated with microwaves having a frequency of 2.45 GHz is in a range of 13 to 60.0, from the viewpoint of uniform drying control.

It is more preferable that the content of the moisturizer is larger in the second ink than in the first ink, from the viewpoint of uniform drying control.

The ink preferably contains a surfactant having a hydroxy group from the viewpoint of applicability of the first ink and the second ink.

The ink more preferably contains a surfactant having a diol structure from the viewpoint of applicability of the first ink and the second ink.

Even if the base material is a resin film, it can be suitably used because there is no damage to the base material.

In the applying step of the ink, it is preferable that an inkjet head having a water-repellent film is used, and the contact angle of the first ink and the second ink with respect to the water-repellent film is in a range of 60 to 80 at 25°C from the viewpoint of improving the ejection stability of the ink and enabling high-speed drying.

From the viewpoint of the pinning properties of the first ink and the second ink and uniform drying control, it is preferable to have an applying step of a precoat liquid before the applying step of the ink.

It is preferable that the inkjet head includes a nozzle circulation mechanism from the viewpoint of ejection stability of the first ink and the second ink.

From the viewpoint of ejection stability of the first ink and the second ink, it is preferable that the inkjet head includes at least one pressure chamber into which the ink is injected, a pressure generating unit which generates pressure fluctuation of the pressure chamber, a nozzle which communicates with the pressure chamber and serves as a channel of the ink ejected from the pressure chamber to the outside by the pressure fluctuation of the pressure chamber, and a circulation path which communicates with the pressure chamber and discharges the ink inside the nozzle to return the ink to an injection path to the pressure chamber, and that the circulation path is two or more.

In the drying step by irradiation with microwaves, it is preferable to dry the applied matters of the first ink and the second ink by blowing air at 100°C or less from the viewpoint of drying control.

The image forming system of the present invention is an image forming system having an applying means and a drying means of an ink, wherein the ink contains at least one or more of a pigment, inorganic particles, organic particles, and a resin, and water and a water-soluble solvent, the applying means of the ink is a means of ejecting and applying at least a first ink and a second ink onto a base material, at least one drying means of the drying means is a means of drying a coating film by irradiating it with microwaves, when the complex dielectric constants of the first ink and the second ink at a drying rate of 95% are defined as $\varepsilon''1$ and $\varepsilon''2$, respectively, the $\varepsilon''1$ and $\varepsilon''2$ satisfy the formula (1), and when the drying rates of the first ink and the second ink dried at 80°C for 20 seconds are defined as D1 and D2, respectively, the D1 and D2 satisfy the formula (2), which is suitably used for the image forming method of the present invention.

Hereinafter, the present invention, constituent elements thereof, and forms and aspects for carrying out the present invention will be described in detail. In the present description, when two figures are used to indicate a range of value before and after "to", these figures are included in the range as a lower limit value and an upper limit value.

[Outline of Image Forming Method of Present Invention]

The image forming method of the present invention is an image forming method having an applying step and a drying step of an ink, wherein the ink contains at least one or more of a pigment, inorganic particles, organic particles and a resin, and water and a water-soluble solvent, the applying step of the ink is a step of ejecting and applying at least a first ink and a second ink onto a base material, at least one drying step of the drying step is a step of drying a coating film by irradiating it with microwaves, and when the complex dielectric constants of the first ink and the second ink at a drying rate of 95% are defined as $\varepsilon''1$ and $\varepsilon''2$, respectively, the $\varepsilon''1$ and $\varepsilon''2$ satisfy the following formula (1),

$$\text{Formula (1): } \varepsilon''1 < \varepsilon''2$$

and when the drying rates of the first ink and the second ink dried at 80°C for 20 seconds are defined as D1 and D2, respectively, the D1 and D2 satisfy the following formula (2),

$$\text{Formula (2): } D2 < D1.$$

As described above, if drying control during image formation is performed only by warming the atmosphere or irradiating microwaves, there are problems such as an inability to eliminate the trade-off relation between the drying property and the ejection stability of the ink, and image defects such as roughness of the surface of the ink coating film and damage to the base material due to excessive drying of a part of the ink over time.

In the present invention, both high-speed drying and ejection property can be achieved by performing drying by irradiation with microwaves that directly acts on the ink and does not heat the base material or the atmosphere. However, on the other hand, even when the drying is performed by the irradiation with microwaves, in a form in which a plurality of colors are printed and dried at the same time, in particular, the drying properties are greatly different due to the difference in the microwave absorptivity in the later drying stage of each ink.

Therefore, when the drying is collectively performed with microwaves without any consideration, problems will occur in the later drying stage, such as damage to the base material due to excessive drying of a part of the ink and insufficient drying.

On the other hand, according to the present invention, in the image forming method having the above-described configuration, the drying property of each ink is controlled in accordance with the complex dielectric constant in consideration of the difference in the microwave absorptivity in the later drying stage, thereby solving this problem and forming a high-quality image.

Hereinafter, the respective steps and constituent elements will be sequentially described.

1. Image Forming Method

(1.1) Applying Step of Ink

The applying step of an ink according to the present invention is a step of ejecting and applying at least a first ink and a second ink onto a base material. Note that the application of the respective inks in the first ink applying step and the second ink applying step is substantially simultaneous.

(1.1.1) Ink

The type of the ink according to the present invention varies depending on its purpose in terms of, for example, the content ratio of pigment, resin, water, water-soluble solvent, and surfactant, and the complex dielectric constant in the later drying stage, that is, the complex dielectric constant of each ink at a drying rate of 95% in the present invention varies.

Therefore, the ink (first ink) having a relatively small complex dielectric constant in the later drying stage as compared with other inks is excellent in uniform drying control when the drying rate of the ink is relatively large. In addition, the ink (second ink) having a relatively large complex dielectric constant in the later drying stage as compared with the first ink is excellent in uniform drying control when the drying rate of the ink is relatively small.

From such a viewpoint, when the complex dielectric constants of the first ink and the second ink at a drying rate of 95% are defined as $\varepsilon''1$ and $\varepsilon''2$, respectively, the $\varepsilon''1$ and $\varepsilon''2$ satisfy the following formula (1),

$$\text{Formula (1): } \varepsilon''1 < \varepsilon''2,$$

and when the drying rates of the first ink and the second ink dried at 80°C for 20 seconds are defined as D1 and D2, respectively, the D1 and D2 satisfy the following formula (2),

$$\text{Formula (2): } D2 < D1.$$

Thus, both high-speed drying and ejection stability of the ink can be achieved, and damage to the base material does not occur.

In the present invention, a plurality of kinds of inks having different components, contents, and the like are used as described above. For example, when two kinds of inks are focused, one of the inks is referred to as a first ink and the other is referred to as a second ink. The first ink and the second ink are characterized in that, as described above, their complex dielectric constants and drying rates in their later drying stages are relatively different from each other.

The complex dielectric constant and the drying rate can be controlled by, for example, the amount of the color material contained in the ink or the moisturizer contained in the water-soluble solvent.

The first ink and the second ink may be applied not only to the same position on the base material, but also to different positions.

(Pigment)

The ink according to the present invention preferably uses, as the pigment, an anionic dispersible pigment, for example, a self-dispersing pigment having an anionic group on the surface, a pigment dispersed by an anionic polymer dispersant, or a pigment dispersed by coating the surface with an anionic resin. In addition, the ink preferably contains a pigment dispersant for dispersing the pigment. In particular, a pigment dispersed with an anionic polymer dispersant is preferably used in terms of excellent dispersibility and appropriate reaction between the precoat liquid and the pigment to cause pinning.

As the pigment, conventionally known pigments can be used without any particular limitation, and for example, inorganic pigments containing inorganic particles, such as titanium oxide, and organic pigments containing organic particles, such as insoluble pigments and lake pigments, can be preferably used.

[Insoluble Pigment]

The insoluble pigment is not particularly limited, but for example, azo, azomethine, methine, diphenylmethane, triphenylmethane, quinacridone, anthraquinone, perylene, indigo, quinophthalone, isoindolinone, isoindoline, azine, oxazine, thiazine, dioxazine, thiazole, phthalocyanine, diketopyrrolopyrrole, and the like are preferable.

[Organic Pigment]

Specific examples of the organic pigment that can be preferably used include the following pigments.

Examples of pigments for magenta and red include, C. I. Pigment Red 2, C. I. Pigment Red 3, C. I. Pigment Red 5, C. I. Pigment Red 6, C. I. Pigment Red 7, C. I. Pigment Red 15, C. I. Pigment Red 16, C. I. Pigment Red 48:1, C. I. Pigment Red 53:1, C. I. Pigment Red 57:1, C. I. Pigment Red 122, C. I. Pigment Red 123, C. I. Pigment Red 139, C. I. Pigment Red 144, C. I. Pigment Red 149, C. I. Pigment Red 166, C. I. Pigment Red 177, C. I. Pigment Red 178, C. I. Pigment Red 202, C. I. Pigment Red 222, C. I. Pigment Violet 19.

Examples of the pigment for orange or yellow include C. I. Pigment Orange 31, C. I. Pigment Orange 43, C. I. Pigment Yellow 12, C. I. Pigment Yellow 13, C. I. Pigment Yellow 14, C. I. Pigment Yellow 15, C. I. Pigment Yellow 15:3, C. I. Pigment Yellow 17, C. I. Pigment Yellow 74, C. I. Pigment Yellow 93, C. I. Pigment Yellow 128, C. I. Pigment Yellow 94, C. I. Pigment Yellow 138, and C. I. Pigment Yellow 155. Particularly in terms of the balance between color tone and light fastness, C. I. Pigment Yellow 155 is preferred.

Examples of pigment for green or cyan include C. I. Pigment Blue 15, C. I. Pigment Blue 15:2, C. I. Pigment Blue 15:3, C. I. Pigment Blue 16, C. I. Pigment Blue 60, and C. I. Pigment Green 7.

Examples of the pigment for black include C. I. Pigment Black 1, C. I. Pigment Black 6, and C. I. Pigment Black 7.

[Inorganic Pigment]

As an inorganic pigment, inorganic pigments having various colors can be used. In particular, the inorganic pigment is preferably used as the white pigment. The white pigment is not particularly limited as long as the white pigment is a pigment that allows a cured film formed by curing the ink containing the white pigment to appear white.

Examples of the white pigment include titanium oxide, zinc oxide, zinc sulfide, calcium carbonate, calcium silicate, barium sulfate, aluminum hydroxide, antimony oxide, zirconium oxide, silicas such as finely divided silicic acid and synthetic silicates, talc, and clay. Among these, in view of whiteness (color developing properties), a white metal oxide is preferable and titanium oxide is more preferable. These may be used alone or in combination of two or more kinds thereof.

Note that according to the present invention, it is possible to suppress bleeding and improve adhesion in a particularly suitable manner for titanium oxide, for which it is generally difficult to ensure the ink ejection stability and adhesion. Titanium oxide has three crystal forms of an anatase type, a rutile type, and a brookite type, and general-purpose titanium oxides can be roughly classified into the anatase type and the rutile type. Although not particularly limited, a rutile type having a large refractive index and high concealability is preferable. Specific examples thereof include the TR series manufactured by Fuji Titanium Industry Co., Ltd., the JR series manufactured by Tayca Corporation, and TIPAQUE manufactured by Ishihara Sangyo Kaisya, Ltd.

[Pigment Dispersant]

When the ink according to the present invention contains a pigment, it preferably contains a pigment dispersant for dispersing the pigment. The pigment dispersant for dispersing the pigment according to the present invention is not particularly limited, but a polymer dispersant having an anionic group is preferable, and a dispersant having a molecular weight in a range of 5000 to 200000 can be suitably used.

Examples of the polymer dispersant include: block copolymers and random copolymers having a structure derived from two or more monomers selected from styrene, styrene derivatives, vinylnaphthalene derivatives, acrylic acid, acrylic acid derivatives, maleic acid, maleic acid derivatives, itaconic acid, itaconic acid derivatives, fumaric acid, and fumaric acid derivatives; salts thereof; polyoxyalkylenes; and polyoxyalkylene alkyl ethers. The polymer dispersant preferably has an acryloyl group and is preferably added after neutralization with a neutralizing base.

In particular, when the pigment is titanium oxide, the titanium oxide is preferably dispersed with a polymer dispersant having an acryloyl group. The neutralizing base is not particularly limited, but is preferably an organic base such as ammonia, monoethanolamine, diethanolamine, triethanolamine, or morpholine.

The amount of the polymer dispersant to be added is preferably within a range of 10 to 100% by mass, more preferably within a range of 10 to 40% by mass relative to the pigment.

It is particularly preferable that the pigment has a form of a so-called capsule pigment in which the pigment is coated with the above-described polymer dispersant. As a method of coating the pigment with the polymer dispersant, various known methods can be used, and preferred examples thereof include a phase inversion emulsification method, an acid precipitation method, and a method in which the pigment is dispersed with a polymerizable surfactant, a monomer is supplied thereto, and the pigment is coated with the monomer while polymerizing the monomer.

A particularly preferable method is a method in which a water-insoluble resin is dissolved in an organic solvent such as methyl ethyl ketone, the acidic group in the resin are partially or completely neutralized with a base, the pigment and ion-exchanged water are added thereto, the mixture is dispersed, the organic solvent is removed, and water is added as necessary.

The average particle diameter of the pigment in a dispersed state in the ink is preferably 50 nm or more and less than 200 nm. Thus, the dispersion stability of the pigment can be improved, and the storage stability of the ink can be improved. The particle diameter of the pigment can be measured with a commercially available particle diameter measuring device using a dynamic light scattering method, an electrophoresis method, or the like, and the measurement by the dynamic light scattering method is simple and can accurately measure a region of the particle diameter.

The pigment can be used after being dispersed by a dispersing machine together with a dispersant and other additives necessary for various desired purposes.

As the dispersing machine, a conventionally known ball mill, sand mill, line mill, high-pressure homogenizer or the like can be used. In particular, it is preferable to disperse the pigment by the sand mill because the particle size distribution becomes sharp. In addition, the material of the beads used for the sand mill dispersion is not particularly limited but is preferably zirconia or zircon from the viewpoint of preventing generation of bead fragments or contamination of ion components. Furthermore, the bead size is preferably within a range of 0.3 to 3 mm.

The content of the pigment in the ink is not particularly limited, but the content of titanium oxide is preferably in a range of 7 to 18 % by mass, and the content of the organic pigment is preferably in a range of 0.5 to 7 % by mass.

(Resin)

When the resin is contained in the ink, the fixability of the ink to the recording medium can be enhanced. Examples of the resin include vinyl chloride-based resin, (meth) acrylic resin, urethane-based resin, polyether-based resin, and polyester-based resin. Among them, it is preferable that the ink contains an ionic resin from the viewpoints of the fixability, the film formability, and the like.

When drying with microwaves is performed in the drying step described below, the resin having ionic properties is directly heated with microwaves, so that the film-forming properties are improved and the adhesion to the base material is improved. The above-described resin having ionic properties is preferably water-insoluble resin fine particles, and the resin fine particles preferably have a glass transition temperature (Tg) in the range of 40 to 90°C.

The glass transition temperature can be specified by reading a glass transition temperature (Tg) from an endothermic peak when a temperature is increased at a temperature increase rate of 10°C/min in a temperature range of -30 to 200°C using a differential scanning calorimeter (DSC).

The water-insoluble resin preferably used in the present invention is a water-insoluble resin that can accept an ink and exhibits solubility or affinity for the ink. The "water-insoluble resin fine particle" used in the present invention is originally water-insoluble, but has a form in which a resin is dispersed in an aqueous medium as micro fine particles, and is a water-insoluble resin which is dispersed in water by forced emulsification with an emulsifier or the like, or a self-emulsifiable water-insoluble resin which forms a stable water dispersion by itself without using an emulsifier or a dispersion stabilizer by introducing a hydrophilic functional group into the molecule. These resin are usually used in a state of being emulsified and dispersed in water or a water/alcohol mixed solvent.

In the present invention, the term "water-insoluble" means that when the resin is dried at 105°C for 2 hours and then dissolved in 100 g of water at 25°C, the amount of dissolution is 10 g or less, preferably 5 g or less, and more preferably 1 g or less. However, when the resin has a salt-forming group, the amount of dissolution is the amount of dissolution when 100% of the salt-forming group of the resin is neutralized with acetic acid or sodium hydroxide, depending on the type of the salt-forming group.

The resin having the glass transition temperature (Tg) in the range of 40 to 90°C is preferably any one of an acrylic resin, an urethane resin, a polyester, or a composite resin of the urethane resin and the acrylic resin. In particular, the acrylic resin, the urethane resin, the polyester, or the composite resin of the urethane resin and the acrylic resin is preferable, and the average particle diameter of these resin fine particles is preferably 200 nm or less. Furthermore, the average particle diameter is more preferably within a range of 100 to 150 nm.

The polyester, the urethane resin, the acrylic resin, or the composite resin fine particles of the urethane resin and the acrylic resin are preferably anionic. Among these, it is preferable that the resin fine particles contained in the ink have an acid structure, and even when the addition amount of the surfactant is small, the resin fine particles can be dispersed in water, and thus the water resistance is improved. This is called a self-emulsifying type, which means that a resin can be stably dispersed in water without using a surfactant or with only molecular ionic property even if a small amount of surfactant is used.

Examples of the acid structure include acid groups such as a carboxy group (-COOH) and a sulfonic acid group (-SO$_3$H). The acid structure may be present in a side chain of the resin or may be present at a terminal thereof. The ink according to the present invention particularly preferably contains a water-dispersible polyester having a sulfonic acid group, whereby high adhesion to a base material can be obtained.

Part or all of the acid structure is preferably neutralized, and the neutralization of the acid structure can improve the water dispersibility of the resin. As the neutralizing agent for neutralizing the acid structure, for example, organic amines are preferable, and it is preferable to use organic amines such as trimethylamine, triethylamine, tripropylamine, tributylamine, N-methyldiethanolamine, and triethanolamine. Furthermore, the ink according to the present invention preferably contains resin fine particles having aggregation property of 0.2 or less with a 0.15 % by mass calcium acetate aqueous solution in a range of 3 to 15 % by mass.

Use of such resin fine particles having low aggregation properties can provide high ejection stability while ensuring high wettability to the base material, thereby providing higher image quality and excellent adhesion to the base material.

Hereinafter, each of the resin will be described.

[Polyester]

The polyester having a polyester skeleton used as the water-insoluble resin particles can be obtained by using a polyhydric alcohol component and a polycarboxylic acid component such as a polycarboxylic acid, a polycarboxylic acid anhydride, or a polycarboxylic acid ester.

Specific examples of the polyhydric alcohol component include dihydric alcohols (diols) such as alkylene glycols having 2 to 36 carbon atoms (e.g., ethylene glycol, 1,2-propylene glycol, 1,3-propylene glycol, 1,4-butylene glycol, and 1,6-hexanediol), alkylene ether glycols having 4 to 36 carbon atoms (e.g., diethylene glycol, triethylene glycol, dipropylene glycol, polyethylene glycol, polypropylene glycol, and polybutylene glycol), cycloaliphatic diols having 6 to 36 carbon atoms (e.g., 1,4-cyclohexanedimethanol and hydrogenated bisphenol-A), adducts of the cycloaliphatic diols with alkylene oxides having 2 to 4 carbon atoms (e.g., ethylene oxides (hereinafter abbreviated as EO), propylene oxides (hereinafter abbreviated as PO), and butylene oxides (hereinafter abbreviated as BO)) (addition mole number: 1 to 30), and adducts of bisphenols (e.g., bisphenol-A, bisphenol-F, and bisphenol-S) with alkylene oxides having 2 to 4 carbon atoms (e.g., EO, PO, and BO) (addition mole number: 2 to 30). These may be used alone or in combination of two or more kinds thereof.

Examples of the polyvalent carboxylic acid component include divalent carboxylic acids (dicarboxylic acids), specifically alkanedicarboxylic acids having 4 to 36 carbon atoms (e.g., succinic acid, adipic acid, and sebacic acid), alkenylsuccinic acids (e.g., dodecenylsuccinic acid), alicyclic dicarboxylic acids having 4 to 36 carbon atoms (e.g., dimer acid (dimerized linoleic acid)), alkenedicarboxylic acids having 4 to 36 carbon atoms (e.g., maleic acid, fumaric acid, citraconic acid, and mesaconic acid), and aromatic dicarboxylic acids having 8 to 36 carbon atoms (e.g., phthalic acid, isophthalic acid, terephthalic acid, or derivatives thereof, and naphthalenedicarboxylic acid). These may be used alone or in combination of two or more kinds thereof.

The polyester is preferably a polyester having an anionic group in the molecule, and among these, a polyester containing a sulfonic acid group is preferable.

As a known synthesis method of obtaining the polyester containing the sulfonic acid group, for example, a method such as a polycondensation reaction of the dicarboxylic acid having the sulfonic acid group and the diol can be mentioned. Alternatively, it can be obtained by a method such as a polycondensation reaction of the dicarboxylic acid and the diol having the sulfonate.

Specific examples of the dicarboxylic acids having a sulfonic acid group include, but are not limited to, 2-sulfoterephthalic acid, 5-sulfoisophthalic acid, 4-sulfonaphthalenephthalic acid-2,7-dicarboxylic acid, 5-(4-sulfophenoxy) phthalic acid, and alkali metals salts thereof.

Examples of the diol having a sulfonic acid group include 2-sulfo-1,4-butanediol, 2,5-dimethyl-3-sulfo-2,5-hexanediol, and alkali metals salts thereof.

The number average molecular weight of the polyester is preferably in the range of 1,000 to 50000, and more preferably in the range of 2000 to 20000.

The polyester may be a commercially available product, and commercially available products of the water-dispersible polyester having a sulfonic acid group include, for example, Vylonal MD-1100, MD-1200, MD-1245, MD-1480, MD-1500, and MD-2000, manufactured by Toyobo Co., Ltd., Plascoat Z-221, Z-446, Z-561, Z-880, and Z-3310, manufactured by Goo Chemical Co., Ltd., Pesresin A-520, A-613D, A-615GE, A-640, A-645GH, A-647GEX, A-110F, and A-160P, manufactured by Takamatsu Oil & Fat Co., Ltd.

Among the above, resins having a glass transition temperature (Tg) within a range of 40 to 90°C are particularly preferable, and examples thereof include Vylonal MD-1100, MD-1200, MD-1245, MD-1500, and MD-2000, manufactured by Toyobo Co., Ltd., Plascoat Z-221, Z-446, and Z-561, manufactured by Goo Chemical Co., Ltd, and Pesresin A-520, A-613D, A-615GE, a-640, A-645GH, and A-647GEX, manufactured by Takamatsu Oil & Fat Co., Ltd. These may be used alone or in combination of two or more kinds thereof.

[Urethane Resin]

As the urethane resin used as the water-insoluble resin particles according to the present invention, those having a hydrophilic group can be used. The urethane resin is preferably an aqueous dispersion in which self-emulsifying urethane having a water-soluble functional group, that is, a hydrophilic group in its molecule is dispersed, or an aqueous dispersion of forcibly emulsifying urethane which is emulsified under a strong mechanical shearing force by using a surfactant in combination. The urethane resin in the aqueous dispersion can be obtained by a reaction of a polyol with an organic polyisocyanate and a hydrophilic group-containing compound.

Examples of polyols that may be used in the preparation of the aqueous dispersion of the urethane resin include polyester polyol, polyether polyol, polycarbonate polyol, and polyolefin-based polyol.

Examples of the polyester polyol include low molecular weight polyols such as ethylene glycol, diethylene glycol, triethylene glycol, 1,2- and 1,3-propylene glycol, neopentyl glycol, 1,3- and 1,4-butanediol, 3-methylpentanediol, hexamethylene glycol, 1,8-octanediol, 2-methyl-1,3-propanediol, bisphenol-A, hydrogenated bisphenol-A, trimethylolpropane, and cyclohexanedimethanol; and condensates with polyvalent carboxylic acids such as succinic acid, glutaric acid, adipic acid, sebacic acid, phthalic acid, isophthalic acid, terephthalic acid, trimellitic acid, tetrahydrofuran, endomethine tetrahydrofuran, and hexahydrophthalic acid.

Examples of the polyether polyol include polyethylene glycol, polypropylene glycol, polyethylene polytetramethylene glycol, polypropylene polytetramethylene glycol, polytetramethylene glycol and the like.

An example of the polycarbonate polyol can be obtained by reacting a carbonic acid derivative such as diphenyl carbonate, dimethyl carbonate, or phosgene with a diol.

Examples of the diols include ethylene glycol, diethylene glycol, triethylene glycol, 1,2- and 1,3-propylene glycol, neopentyl glycol, 1,3- and 1,4-butanediol, 3-methylpentanediol, hexamethylene glycol, 1,8-octanediol, 2-methyl-1,3-propanediol, bisphenol-A, hydrogenated bisphenol-A, trimethylolpropane, and cyclohexanedimethanol.

In addition, examples of the organic polyisocyanate which can be used in the preparation of the aqueous dispersion of the urethane resin include aromatic isocyanates such as tolylene diisocyanate (TDI), diphenylmethane diisocyanate (MDI), polymeric MDI, xylylene diisocyanate (XDI), and tetramethylxylylene diisocyanate (TMXDI); aliphatic isocyanates such as hexamethylene diisocyanate (HMDI); and alicyclic isocyanates such as isophorone diisocyanate (IPDI) and 4,4'-dicyclohexylmethane diisocyanate (hydrogenated MDI, H12MDI). These may be used alone or in combination of two or more kinds thereof.

Examples of the hydrophilic group-containing compounds that can be used for the preparation of the aqueous dispersion of urethane resin include carboxylic acid-containing compounds such as 2,2-dimethylolpropionic acid, 2,2-dimethylolbutanoic acid, 2,2-dimethylolbutyric acid, 2,2-dimethylolvaleric acid and glycine, and derivatives thereof such as sodium salts, potassium salts and amine salts; sulfonic acid-containing compounds such as taurine (i.e., aminoethylsulfonic acid) and ethoxypolyethylene glycol sulfonic acid and derivatives thereof such as sodium salts, potassium salts and amine salts.

The urethane resin can be obtained by a known method. For example, the urethane prepolymer can be obtained by mixing the polyol, the organic polyisocyanate, and the hydrophilic group-containing compound, and reacting the mixture at a temperature in the range of 30 to 130°C for 30 minutes to 50 hours. The urethane prepolymer becomes the urethane resin having a hydrophilic group by being extended and polymerized by a chain extender.

The chain extender is preferably water and/or an amine compound. By using water or an amine compound as the chain extender, it is possible to react with a free isocyanate in a short time and efficiently extend the isocyanate-terminated prepolymer.

Examples of the amine compound as the chain extender include aliphatic polyamines such as ethylenediamine and triethylenediamine; aromatic polyamines such as metaxylenediamine and tolylenediamine; and polyhydrazino compounds such as hydrazine and adipic acid dihydrazide. The amine compound may contain, together with the polyamine, a monovalent amine such as dibutylamine, methyl ethyl ketoxime, or the like as a reaction terminator to the extent that the polymerization is not significantly inhibited.

Note that in the synthesis of the urethane prepolymer, the solvent that is inert to isocyanate and can dissolve the urethane prepolymer may be used. Examples of these solvents include dioxane, methyl ethyl ketone, dimethylformamide, tetrahydrofuran, N-methyl-2-pyrrolidone, toluene, and propylene glycol monomethyl ether acetate. It is preferable that these hydrophilic organic solvents used in the reaction stage are finally removed.

In addition, in the synthesis of the urethane prepolymer, in order to accelerate the reaction, a catalyst such as an amine catalyst (for example, triethylamine, N-ethylmorpholine, or triethyldiamine), a tin-based catalyst (for example, dibutyltin dilaurate, dioctyltin dilaurate, or tin octylate), or a titanium-based catalyst (for example, tetrabutyl titanate) may be added.

It is preferable to increase the number average molecular weight of the urethane resin as much as possible by introducing a branched structure or an internal crosslinked structure, and the number average molecular weight is preferably in the range of 50000 to 10000000. By setting the molecular weight within the above range, the urethane resin becomes less soluble in the solvent, and therefore, the coating film excellent in weather resistance and water resistance is obtained. In addition, a commercially available product may be used as the urethane resin. Examples of commercially available products of the urethane resin having a glass transition temperature (Tg) in the range of 40 to 90°C include Neorez R-967, R-600, and R-9671 manufactured by Kusumoto Chemicals, Ltd., Evafanol HA-560 manufactured by Nicca Chemical Co., Ltd, and SF870 manufactured by Dai-ichi Kogyo Seiyaku Co., Ltd.

Note that the number-average molecular weight (Mn) is a value measured by gel permeation chromatography (GPC), and can be determined from the calibration curve prepared with the polystyrene standard samples using, for example, "RID-6A" manufactured by Shimadzu Corporation (column: "TSK-GEL" manufactured by Tosoh Corp., solvents: tetrahydrofuran (THF), column temperature: 40°C).

[Acrylic Resin]

The acrylic resin used as the water-insoluble resin particles can be obtained using a copolymer with an acrylic acid ester component, a methacrylic acid ester component, a styrene component, or the like.

Examples of the acrylate ester components and the methacrylate ester components include methyl (meth) acrylate, ethyl (meth) acrylate, propyl (meth) acrylate, butyl (meth) acrylate, 2-hydroxyethyl (meth) acrylate, 2-hydroxypropyl (meth) acrylate, 4-hydroxybutyl (meth) acrylate, cyclohexyl (meth) acrylate, tetrahydrofurfuryl (meth) acrylate, isobornyl (meth) acrylate, benzyl (meth) acrylate, 2-hydroxybutyl (meth) acrylate, benzyl (meth) acrylate, glycidyl (meth) acrylate, (meth) acrylate, ethylene glycol di (meth) acrylate, 1,4-butanediol di (meth) acrylate, 1,6-hexanediol di (meth) acrylate, trimethylolpropane tri (meth) acrylate, glycerol di (meth) acrylate, 2-ethylhexyl (meth) acrylate, lauryl (meth) acrylate, stearyl (meth) acrylate, and acrylamides.

Examples of the styrene component include styrene, 4-methylstyrene, 4-hydroxystyrene, 4-acetoxystyrene, 4-acetylstyrene, and styrene sulfonic acid. These components may be used alone or in combination of two or more kinds thereof.

The number average molecular weight (Mn) of the acrylic resin is preferably within a range of 1000 to 50000, more preferably within a range of 2000 to 20000. This is because when the number average molecular weight (Mn) of the acrylic resin is 1000 or more, the cohesive force of the coating film becomes strong and the adhesion is improved, and when it is 50000 or less, the solubility in an organic solvent is good and the micronization of the particle diameter of the emulsified dispersion is promoted.

A commercially available product may be used as the acrylic resin. Examples of commercially available products of the acryl resin having a glass transition temperature (Tg) in a range of 40 to 90°C include Mowinyl 6899D, 6969D, and 6800 manufactured by Japan Coating Resins Co., Ltd., and acryl-based emulsions such as TOCRYL W-7146, W-7147, W-7148, W-7149, and W-7150 manufactured by Toyo Chem Co., Ltd.

Note that the number-average molecular weight (Mn) is a value measured by gel permeation chromatography (GPC), and can be determined from the calibration curve prepared with the polystyrene standard samples using, for example, "RID-6A" manufactured by Shimadzu Corporation (column: "TSK-GEL" manufactured by Tosoh Corp., solvents: tetrahydrofuran (THF), column temperature: 40°C).

[Composite Resin Fine Particles]

The composite resin fine particles that can be contained in the ink are preferably composite resin fine particles formed by emulsifying the acrylic resin in the urethane resin. That is, the composite resin fine particle is preferably a composite resin fine particle having an inner layer composed of the acrylic resin and a surface layer composed of the urethane resin.

Here, the urethane resin exists at the interface between the acrylic resin as the water-insoluble resin particles and water as a continuous phase, and functions as a water-insoluble resin particle layer different from the resin that protects the water-insoluble resin particles. When the composite resin fine particles are formed by emulsifying the acrylic resin with the urethane resin as described above, the physical property of an image (coating film) can be improved and the storage stability of the composite resin fine particles can also be improved as compared with the case where the acrylic resin and the urethane resin are separately emulsified and mixed.

In the composite resin fine particles obtained by emulsifying the acrylic resin with the urethane resin, the value (U/A) of the mass ratio of the urethane resin (U) to the acrylic resin (A) is preferably within the range of (40/60) to (95/5). When the presence ratio of the urethane resin (U) is within the above range, the compatibility with the dispersant is improved, and the solvent resistance is also improved.

In addition, when the presence ratio of the acrylic resin (A) is within the above range, adhesion to the acrylic film is excellent. In the above-described presence ratio, the value (U/A) of the mass ratio between the urethane resin (U) and the acrylic resin (A) is preferably within the range of (40/60) to (80/20).

The total resin concentration of the acrylic resin and the urethane resin in the composite resin fine particle is not particularly limited, but is preferably 5.0 % by mass or more, more preferably in the range of 10.0 to 70.0 % by mass. When the resin concentration is within such a range, the fixability of the ink to the recording medium becomes satisfactory.

In the emulsification of the acrylic resin with the urethane resin, the surfactant acting as the emulsifier can be used together with the urethane resin. Here, by adding the emulsifier, the storage stability of the composite resin fine particles can be improved. As the emulsifier, an anionic surfactant and a nonionic surfactant can be used. The use of composite resin fine particles in which the acrylic resin is emulsified in the urethane resin can improve the fixability of the image (coating film) to an absorbent base material or a non-absorbent base material.

The average particle diameter of the composite resin fine particles is not particularly limited, but is preferably in a range of 10 to 500 nm, more preferably in a range of 10 to 300 nm, and even more preferably in a range of 10 to 200 nm. The average particle diameter can be measured by a commercially available particle diameter measuring instrument using a dynamic light scattering method, an electrophoresis method, or the like, but the measurement by the dynamic light scattering method is simple and can accurately measure the region of the particle diameter.

(Inorganic Particles)

The inorganic particles contained in the ink according to the present invention are used as an inorganic pigment, for example, by being contained in a pigment. Examples of the pigment containing inorganic particles include white inorganic pigments such as light calcium carbonate, heavy calcium carbonate, magnesium carbonate, kaolin, clay, talc, calcium sulfate, barium sulfate, titanium dioxide, zinc oxide, zinc hydroxide, zinc sulfide, zinc carbonate, hydrotalcite, aluminum silicate, diatomaceous earth, calcium silicate, magnesium silicate, synthetic amorphous silica, colloidal silica, alumina, colloidal alumina, pseudo-boehmite, aluminum hydroxide, lithopone, zeolite, and magnesium hydroxide.

In general, titanium oxide is exemplified as the inorganic particles contained in the ink, but it is difficult to ensure ink ejection stability and adhesion with titanium oxide, and since titanium oxide has a high complex dielectric constant, it is greatly influenced by a heat generation effect due to microwaves in a drying step described later. In the present invention, for example, by coating the above-described precoat liquid in an appropriate amount, the heat generation effect by microwaves can be appropriately controlled, and therefore, the above-described defects of titanium oxide can be compensated.

(Organic Particles)

The organic particles contained in the ink according to the present invention are used as, for example, an organic pigment by being contained in the pigment. The organic particles according to the present invention are water-insoluble organic particles that are dissolved or swollen by a water-soluble organic solvent having a boiling point of 120°C or higher. The material thereof is selected from conventionally known materials such as polyvinyl chloride, polyvinylidene chloride, polyacrylate, polymethacrylate, elastomer, ethylene-vinyl acetate copolymer, styrene-(meth) acrylic copolymer, polyester, polyvinyl ether, polyvinyl acetal, polyamide, polyurethane, polyolefin, SBR, NBR, polytetrafluoroethylene, chloroprene, protein, polysaccharide, rosin ester, and shellac resin.

Particularly preferred materials for the organic particles are polyvinyl acetal-based resin, polyurethane-based resin, rosin ester-based resin, (meth) acrylate-based resin, SBR, and the like, and resins formed from two or more kinds of monomers by modification or copolymerization are also preferably used. In addition, a resin to which a specific modifying group is added or a resin from which a leaving group is removed may be used, two or more kinds of materials may be mixed to form organic particles, and two or more kinds of organic particles may be mixed and used.

The term "dissolve" as used in the present invention means that the organic particles and the water-soluble organic solvent in the ink form a single phase in an equilibrium state, and the term "swell" means that the organic particles absorb the water-soluble organic solvent to increase their volume.

The organic particles according to the present invention must be insoluble in water so as not to dissolve in inkjet recording. However, water is allowed to be absorbed to the extent that the ink absorption rate is not hindered. Water may be absorbed up to 20% by mass, relative to the mass of the organic particles. In addition, a crosslinking agent may be used in the organic particles according to the present invention within a range that does not hinder dissolution or swelling in the water solubility organic solvent.

In the present invention, as the crosslinking agent, a conventionally known crosslinking agent can be appropriately selected and used regardless of whether it is an organic substance or an inorganic substance. In addition, since it is preferable that the organic particles themselves are hydrophilic but not water-soluble, it is preferable that the content is prepared to be in a range of 10% by mass to less than 50% by mass.

Inkjet recording sheets are usually used at room temperature, but the storage condition before use is not necessarily at room temperature. In particular, since the temperature becomes extremely high in a sealed vehicle in summer, it is desired that the inkjet recording sheet can be used without hindrance even after being subjected to such an environment. Therefore, the glass transition temperature (Tg) of the organic particles of the above-described aspect needs to be 70°C or higher, but is preferably 80°C or higher, and more preferably in the range of 90 to 120°C.

When the glass transition temperature (Tg) of the organic particles is less than 70°C, fusion of the organic particles due to heating is likely to occur, and as a result, the voids on the surface of the recording sheet are reduced or decreased, and the ink absorption rate is likely to decrease.

(Water)

The water according to the present invention forms an aqueous solution together with a surfactant, and as the water, known water can be used without any particular limitation.

(Water-Soluble Solvent)

Examples of the water-soluble solvents contained in the ink according to the present invention include solvents such as ethanol (boiling point: 78°C), ethylene glycol (boiling point: 198°C), propylene glycol (boiling point: 188°C), diethylene glycol monobutyl ether (boiling point: 230°C),1,2-hexanediol (boiling point: 170°C), dipropylene glycol (boiling point: 230°C), glycerin (boiling point: 290°C),1,3-propanediol (boiling point: 215°C), and 1,2-pentanediol (boiling point: 242°C). The water-soluble solvent may be a single solvent or a plurality of solvents, and in the case of a plurality of solvents, one of the solvents is preferably a solvent having a boiling point of 150°C or higher. As a result, it is possible to suppress the drying of the ink in the vicinity of the nozzles of the inkjet head and to prevent a problem in terms of ejection property due to clogging of the nozzles or the like caused by the precipitation of a solid content. Furthermore, it is more preferable that one type of the water-soluble solvent is a moisturizer.

[Moisturizer]

The "moisturizer" according to the present invention refers to a solvent that has high absorptivity of microwaves or high-frequency radio waves and a high boiling point. By being contained in the water-soluble solvent contained in the ink according to the present invention, the moisturizer has the effect of suppressing evaporation of water in the ink composition to prevent aggregation of solid contents such as pigment and polymer particles in the ink. Then, it plays a role of retarding the drying speed of the ink.

In a case where a moisturizer having a high boiling point is contained in the water-soluble solvent, the moisturizer is unlikely to evaporate, but the water-soluble solvent itself can be directly heated by utilizing microwaves. The moisturizer is a solvent which is easily dried by irradiation with microwaves, but is a solvent which is not easily dried under a normal atmosphere, and thus is suitable for uniform drying control.

The moisturizer preferably has a boiling point of 200°C or higher. It is possible to achieve ejection stability by imparting moisture retaining properties with an ink to which a solvent (having a high complex dielectric constant) which has a high boiling point and is likely to be directly heated by microwaves or high-frequency dielectric waves and which has a boiling point of 200°C or higher is added. In addition, since it is possible to dry the ink at a high speed by drying with microwaves and high-frequency induction, it is possible to achieve both high-speed drying and ejection stability.

Since the moisturizer is contained in the ink, in a case where the ink is ejected from an inkjet head, it is possible to prevent nozzle clogging due to drying of the ink at a portion of a nozzle included in the inkjet head, and thus the ejection stability of the ink is improved.

In addition, it is preferable that the content of the moisturizer is in the range of 3 to 20% by mass with respect to the first ink or the second ink, and that the complex dielectric constant $\varepsilon''$ at 25°C when the first ink or the second ink is irradiated with the microwaves having a frequency of 2.45 GHz is in the range of 13 to 60.0, from the viewpoint of uniform drying control.

Furthermore, it is more preferable that the content of the moisturizer is larger in the second ink (ink having a relatively high complex dielectric constant) than in the first ink (ink having a relatively low complex dielectric constant) from the viewpoint of uniform drying control.

Examples of the moisturizer include dipropylene glycol (boiling point: 230°C), 1,4-butanediol (boiling point:

230°C), glycerin (boiling point: 290°C), 1,2-pentanediol (boiling point: 242°C), 1,5 pentanediol (boiling point: 242°C), and 1,3-propanediol (boiling point: 215°C).

(Surfactant)

The ink according to the present invention contains a surfactant, whereby the ejection stability of the ink can be improved, and the spread (dot diameter) of a droplet of the ink landed on a recording medium can be controlled.

The surfactant is not particularly limited, but in a case where an anionic compound is included in the constituent components of the ink, the ionic property of the surfactant may be any of anionic, nonionic (also referred to as "non-ionic"), or amphoteric, and the amphoteric surfactant is preferably a betaine type. In the present invention, when an alkaline component is contained in the anionic surfactant, the resin fine particles contained as the fixing resin are easily aggregated and the fixability is lowered, and therefore, the surfactant is preferably nonionic.

As the surfactant, a fluorine-based or silicone-based surfactant having a high ability to reduce static surface tension, an anionic surfactant such as dioctyl sulfosuccinate having a high ability to reduce dynamic surface tension, and a nonionic surfactant having a relatively low molecular weight such as a polyoxyethylene alkyl ether, a polyoxyethylene alkylphenyl ether, an acetylene glycol, a Pluronic® surfactant, and a sorbitan derivative are preferable. Note that a surfactant having a high ability to decrease the static surface tension and a surfactant having a high ability to decrease the dynamic surface tension may be used in combination.

In the present invention, for example, TEGOWET KL245 (polyether-modified siloxane copolymer; manufactured by Evonik Operations GmbH) is preferably used as the surfactant.

It is preferable that the ink contains a surfactant having a hydroxy group because the surface tension and the viscosity of the ink according to the present invention are appropriately controlled and the applicability of the ink is improved, and it is more preferable that the surfactant has a diol structure. The surfactant finally remaining at the time of drying of the ink has a high microwave absorptivity, which results in fast drying and also has an unexpected effect of improved film uniformity. In addition, the complex dielectric constant in a later drying stage is high. Furthermore, when the surfactant has a diol structure, the effect is further enhanced.

(Other Components)

The ink according to the present invention may contain various known additives depending on the other purposes such as ejection stability, compatibility with a print head or ink cartridge, storage stability, and image storage stability. The ink according to the present invention may appropriately contain a pH adjuster, a crosslinking agent, an antifungal agent, a fungicide, and other components.

(1.1.2) Physical Property of Ink

(Complex dielectric constant)

The "complex dielectric constant" in the present invention is a numerical value indicating a response (degree of dielectric polarization) of molecules when an electric field is applied from the outside, is specific to a substance, and is a dimensionless quantity based on the dielectric constant $\varepsilon_0$ (electric constant) in a vacuum.

Since the higher the complex dielectric constant is, the larger the heat generation effect of the microwave is, it is possible to control the drying property by performing an appropriate formulation using the ink (first ink) having a relatively low complex dielectric constant and the ink (second ink) having a relatively high complex dielectric constant.

When the complex dielectric constants of the first ink and the second ink according to the present invention are less than the complex dielectric constant of the precoat liquid to be described later, the precoat liquid is more strongly influenced by the heat generation effect of the microwave than the first ink and the second ink when drying by the microwave is performed in the drying step to be described later.

As a result, the precoat liquid is mixed with the first ink and the second ink, the drying properties of the respective inks are improved, and in the image forming method of the present invention, the quick-drying property can be imparted to a portion where the drying property is desired to be improved. As a result, uniform drying control can be performed, uniform dots without graininess can be formed, and an image with excellent gloss and color gamut can be formed. In addition, when the precoat liquid is applied to an area where the first ink and the second ink are not applied, the influence of the microwave can be controlled in accordance with the areas where the first ink and the second ink are applied, which is preferable.

In the present invention, when the complex dielectric constants of the first ink and the second ink at a drying rate of 95% are defined as $\varepsilon''1$ and $\varepsilon''2$, respectively, the $\varepsilon''1$ and $\varepsilon''2$ satisfy the following formula (1).

Formula (1): $\varepsilon''1 < \varepsilon''2$

Note that since microwaves have a greater heat generating effect as the complex dielectric constant is higher, it is preferable that the complex dielectric constant $\varepsilon''1$ of the first ink and the complex dielectric constant $\varepsilon''2$ of the second ink satisfy the relationship of the following Expression (3) in order to maintain the heat generating effect within an appropriate range and perform uniform drying control.

Formula (3): $(\varepsilon''2/\varepsilon''1) < 20$

The measurement of the complex dielectric constant is performed using a complex dielectric constant measuring device (for example, a material impedance analyzer MIA-5M (SH2 Z-type four terminal sample holder) manufactured by TOYO Corporation).

(Viscosity, Surface Tension, and the Like)

The physical properties of the ink of the present invention are not particularly limited and may be appropriately selected depending on the intended purpose. For example, the viscosity, the surface tension, the pH, and the like are preferably within the following ranges.

The viscosity of the ink at 25°C is preferably in a range of 5 to 30 mPa · s, and more preferably in a range of 5 to 25 mPa · s, from the viewpoint that print density and character quality are improved, and that stable ejection from the nozzles of the inkjet head can be achieved. The viscosity can be measured, for example, by using the rotational viscosity meter "RE-80L" manufactured by Toki Sangyo Co., Ltd. under the measurement conditions of 25°C, a standard cone rotor (1°34' × R24), a sample liquid amount of 1.2 mL, a rotational speed of 50 rpm, and 3 minutes.

The surface tension of the ink is preferably in a range of 1 to 55 mN/m at 25°C, more preferably in a range of 1 to 40 mN/m or less, and still more preferably in a range of 1 to 35 mN/m, from the viewpoint that the ink is appropriately leveled on the recording medium and the drying time of the ink is shortened. Note that the surface tension can be measured by the Wilhelmy method using a surface tensiometer "CBVP-Z" manufactured by Kyowa Interface Science Co., Ltd. or the like.

The pH value of the ink is preferably in a range of 3 to 9, and more preferably in a range of 6 to 9, from the viewpoint of exhibiting the effect of the present invention.

(1.1.3) Ink Application Method

The method of applying the first ink and the second ink according to the present invention onto a base material or onto a base material coated with a precoat liquid is not particularly limited as in the case of the precoat liquid described above, but it is preferable to apply the inks by an inkjet method from the viewpoint of controlling the uniformity and concentration of the inks.

When the second ink is applied after the first ink, it is preferable that the second ink is applied within 0.1 to 5 seconds after the application of the first ink. By applying the second ink immediately after the application of the first ink, diffusion of the first ink and the second ink occurs, and wettability is improved.

(1.2) Ink Drying Step

The drying step according to the present invention includes a step of drying the first ink and the second ink (hereinafter, also simply referred to as "ink drying step"). In the drying step of the ink, the first ink and the second ink applied on the base material, the precoat liquid if necessary, and the like are irradiated with microwaves, and uniform drying control is performed.

The term "uniform drying control" as used herein refers to performing control in a manner such that quick-drying properties are given to a particular portion to be dried and a portion other than the portion to be dried and a portion to be dried are uniformly dried.

(1.2.1) Drying Method

The first ink and the second ink applied onto the base material are dried by being irradiated with microwaves in the ink drying step, and form a coating film. The "coating film" includes not only a coating film formed by the first ink and the second ink, but also a coating film formed by the precoat liquid, the first ink, and the second ink.

The thickness of the coating film obtained as described above is preferably in a range of 0.3 to 3.0 μm, more

preferably in a range of 0.3 to 2.0 $\mu$m. When the thickness of the coating film is 0.3 $\mu$m or more, the adhesion and the abrasion resistance of the image are easily enhanced. In addition, when the thickness of the coating film is 3.0 $\mu$m or less, deformation stress imparted to the ink layer can be reduced, thus adhesion of the image is hardly impaired.

(Microwave)

At least one drying step of the drying step according to the present invention, that is, the ink drying step is a step of drying the coating film by irradiating it with microwaves.

In the image forming method of the present invention, microwaves are used when the ink is dried. Since the microwave has high directivity and the microwave directly acts on a material having a high complex dielectric constant, the drying efficiency is high and a plastic substrate or the like is not damaged.

In addition, since it is not necessary to add a condition under an atmosphere (a condition based on wind, temperature, or the like) to the drying control, it is possible to prevent drying of the nozzle at the time of inkjet application, and it is possible to perform drying immediately after printing without paying attention to the nozzle drying. Furthermore, in a case where a metal salt or the like is included in the precoat liquid, the aggregation effect is increased, and durability and fastness are improved.

Note that in the present specification, the above-described "coating film" includes a liquid state having fluidity such as wet spreadability or permeability immediately after application of the precoat liquid onto an area other than an ink application region on the base material, immediately after application of the ink onto the base material, or immediately after the mixing of the precoat liquid and the ink on the base material, and subsequent states (states after drying).

Furthermore, the above-described "liquid state having fluidity" refers to a state in which a liquid (including a semi-solid state in the present invention) moves so as to wet-spread or penetrate on the base material or the coating film.

Microwave irradiation tends to generate Joule heat and generate heat easily in a case where the complex dielectric constant is high. In the present invention, in order to control the complex dielectric constants and drying properties of the first ink and the second ink, the heat generation effect by microwave irradiation can be uniformly controlled by the properties and combination of the pigment, the resin, water, the water-soluble solvent, the surfactant, and the like.

In the microwave irradiation according to the present invention, for example, a microwave generator manufactured by SPC Electronics Corporation can be used, but a commercially available microwave dryer such as a batch type microwave dryer manufactured by Yamamoto Vinita Co., Ltd. may also be used.

Furthermore, in the present invention, in addition to the above-described drying by microwave irradiation, drying may be performed, for example, using a non-contact heating type drying device such as a drying furnace or a hot-air blower, or using a contact heating type drying device of such as a hot plate or a heat roller. A similar effect can also be expected from drying by high-frequency (13 to 50 MHz) irradiation instead of microwaves.

The heating temperature is preferably within a range of 60 to 120°C, and the heating time is appropriately adjusted in accordance with the type of the base material, the coating amount of the precoat liquid, and the application amounts of the first ink and the second ink.

The drying temperature may be measured by measuring over the entire period of drying of the precoat liquid and the ink selecting any one of the following (a) an atmospheric temperature such as an in-furnace temperature or a hot-air temperature in a case where a non-contact heating-type drying device such as a drying furnace or a hot-air blower is used (b) a temperature of a contact heating section in a case where a contact heating type drying device such as a hot plate or a heat roller is used or (c) a surface temperature of the surface to be dried, and the measurement place is preferably (c) the surface temperature of the face to be dried.

As described above, by heating the coating amount of the precoat liquid and the area to which the ink has been applied, the solvent components of the precoat liquid and the ink are removed, and at the same time, in particular, in the case of a metal base material, the polyvalent metal salt is dried and thermally decomposed at a temperature equal to or higher than the thermal decomposition temperature. In addition, the image abrasion resistance and the adhesion to the base material become excellent.

(Air Drying)

In the drying step by irradiation with microwaves, it is preferable to dry the coated materials of the first ink and the second ink by blowing air at 100°C or lower from the viewpoint of drying control. Furthermore, the air speed is preferably 5 to 40 m/s.

(1.2.2) Drying Rate

In the first ink and the second ink according to the present invention, when the drying rates of the first ink and the second ink dried at 80°C for 20 seconds after being applied onto a substrate are defined as D1 and D2, respectively, the D1 and D2 satisfy the following formula (2).

$$\text{Formula (2): } D2 < D1.$$

For example, when the drying property is not taken into consideration, there is no large difference in the complex dielectric constant between the first ink and the second ink in the early drying stage in which the drying does not progress during the microwave irradiation, but the second ink according to the present invention has a significantly higher complex dielectric constant than the first ink in the later drying stage, and thus the second ink has a higher drying property and dries quickly. However, since the drying properties of the first ink and the second ink are balanced by setting the drying rate (D1) of the first ink to be larger than the drying rate (D2) of the second ink, it is possible to uniformly control the drying properties.

The drying rate when the first ink and the second ink are dried at 80°C for 20 seconds is measured and calculated as follows.

The ink is applied onto a PET base material cut into a 10 cm × 10 cm portion with a wire bar to obtain a sample for drying rate measurement. Immediately thereafter, the mass of the sample is measured with an electronic balance, and the measured value is defined as the "mass before drying" of the sample. The sample is dried in a hot-air oven at 80°C for 20 seconds and then the mass is measured again with the electronic balance, and the measured value is defined as the "mass after drying" of the sample.

The total mass of the ink is determined from the application amount of the ink applied on the PET base material cut into a 10 cm × 10 cm portion. The total mass of the solvent in the ink is then obtained from the proportion of the solvent in the entire ink.

Since (mass before drying - mass after drying) is considered to be the mass lost by evaporation of the ink, the drying rate is expressed by the following formula.

$$\text{Drying rate [\%]} = (\text{mass before drying - mass after drying})/\text{total mass of solvent in ink} \times 100$$

(1.3) Other Steps

It is preferable to have an applying step of a precoat liquid before the ink applying step or the ink drying step. The precoat liquid according to the present invention plays a role of fixing (pinning) the first ink and the second ink on the recording medium.

The precoat liquid described above can be applied before the first ink and the second ink are applied onto the base material, but the precoat liquid can also be applied after the first ink and the second ink are applied onto the base material.

Furthermore, for example, by applying a precoat liquid having a high complex dielectric constant before ejection of the ink, it is possible to improve the drying property of a portion to which the precoat liquid is applied. The drying property can also be controlled by adjusting the amount of precoat in accordance with the difference in the complex dielectric constant between the first ink and the second ink.

Therefore, it is preferable to have the applying step of the precoat liquid before the ink applying step, from the viewpoints of the pinning properties and uniform drying control of the first ink and the second ink.

The precoat liquid is usually used for the purpose and from the viewpoint of moderately aggregating the ink, suppressing aggregation unevenness, improving the pinning properties of the ink, and the like. For example, when the precoat liquid plays a role of fixing (pinning) the ink onto a recording medium, the precoat liquid is applied onto a base material before application of the ink, and after drying of the precoat liquid, the precoat liquid is mixed with the ink on the base material to form an ink aggregated layer.

In the image forming method of the present invention, the above-described precoat liquid may not be used, but the use of the precoat liquid makes it possible to achieve more uniform drying control because the aggregation effect due to the reaction between the precoat liquid and the ink can be utilized and quick-drying properties can also be imparted. Furthermore, uniform drying control can be achieved by applying a precoat liquid having a high complex dielectric constant to a desired portion.

(1.3.1) Precoat liquid

The precoat liquid according to the present invention contains, for example, a resin, a metal salt, an organic acid, an inorganic acid, a solvent, a surfactant, and the like. Of these, a metal salt, a resin (particularly, a cationic resin), or an organic acid react and thicken when mixed with the ink, and have an effect as an aggregating agent, so that a high-quality image can be formed even when an image formation is performed on, for example, the non-absorbent substrate.

Regarding the above, one type may be used or a combination of two or more types can be used.

When drying with microwaves is performed in the drying step described below, the complex dielectric constant of the precoat liquid can be changed by the combination of these materials, so that the heat generation effect of the microwaves can be controlled, and in addition to the aggregation pinning effect of the precoat liquid and the ink, the drying pinning effect by the microwaves is superimposed, whereby an image with less graininess and high glossiness and color gamut can be formed.

It is preferable that the complex dielectric constant of the precoat liquid is equal to or higher than the complex dielectric constants of the first ink and the second ink from the viewpoint of improving the drying properties of the mixed coating film of the precoat liquid and the ink, forming uniform dots without graininess, and improving gloss and color gamut.

(Resin)

Examples of the resin of the precoat liquid according to the present invention include vinyl chloride-based resin, (meth) acryl-based resin, urethane-based resin, polyether-based resin, and polyester-based resin. Among them, it is preferable that the precoat liquid contains an ionic resin from the viewpoints of the fixability, the film formability, and the like.

The resin contained in the precoat liquid according to the present invention may be water-soluble. Usually, since the pigment is an anionic component, it is preferable that the resin contained in the precoat liquid is a cationic resin because the resin is mixed with the ink to form an ink aggregated layer.

(Metal Salt)

The precoat liquid according to the present invention preferably contains an inorganic or organic polyvalent metal salt as the metal salt. When the precoat liquid contains the polyvalent metal salt, an anionic component in the ink mixed with the precoat liquid on the base material aggregates by salting-out.

As the polyvalent metal salt, a salt of a metal having a valence of two or more can be used. The kinds of metals (cations) constituting the polyvalent metal salts are not particularly limited, and examples thereof include divalent metallic ions such as $Ca^{2+}$, $Cu^{2+}$, $Ni^{2+}$, $Mg^{2+}$, $Zn^{2+}$, $Ba^{2+}$, trivalent metallic ions such as $Al^{3+}$, $Fe^{3+}$, $Cr^{3+}$, $Y^{3+}$, and tetravalent metallic ions such as $Zr^{4+}$.

The type of the salt forming the polyvalent metal salt is not particularly limited, and for example, known salts such as carbonates, sulfates, nitrates, hydrochlorides, organic acid salts, borates, and phosphates can be used. In particular, for example, calcium salts or magnesium salts of carboxylic acids such as calcium chloride, magnesium chloride, calcium nitrate, magnesium nitrate, magnesium acetate, calcium acetate, magnesium lactate, and calcium pantothenate are preferable.

Examples of the metal salt other than the polyvalent metal salt include monovalent metal salts such as sodium salts and potassium salts, and examples thereof include sodium sulfate and potassium sulfate.

(Organic Acid)

The organic acid is capable of aggregating the pigment that may be contained in the ink. When the organic acid is contained in the precoat liquid as the aggregating agent, the anionic component in the ink can be aggregated by a pH change.

From the viewpoint of not weakening the aggregation force of the polyvalent metal salt, the organic acid is preferably a monovalent carboxylic acid, and examples thereof include formic acid, malonic acid, acetic acid, propionic acid, isobutyric acid, and benzoic acid.

In addition, by using an organic acid, the storage stability of the precoat liquid is easily maintained, and blocking is unlikely to occur after the precoat liquid is applied and dried. Preferable examples of the organic acid from this viewpoint include formic acid, malonic acid, acetic acid, propionic acid, and benzoic acid.

(Inorganic Acid)

Examples of the acid other than the organic acid include an inorganic acid such as sulfuric acid, hydrochloric acid, nitric acid, and phosphoric acid, and these acids may be used alone or in combination of two or more.

(Solvent)

In the precoat liquid according to the present invention, both a water-soluble solvent and a non-aqueous solvent can be used as the solvent.

[Water-Soluble Solvent]

The precoat liquid according to the present invention can contain, as a solvent, a water-soluble solvent having a boiling point in a range of 150 to 250°C. When such a water-soluble solvent having a high boiling point is contained, the precoat liquid is less likely to evaporate and the drying property is lowered, which is preferable from the viewpoint of uniform drying control.

Therefore, for example, in the image forming method of the present invention, by applying a precoat liquid containing a water-soluble solvent having a high boiling point as described above to a portion where the drying property is desired to be lowered, the drying speed of a specific portion can be reduced, which is suitable for uniform drying control.

Examples of the water-soluble solvents include alcohols, polyhydric alcohols, amines, amides, glycol ethers, and 1,2-alkanediols having 4 or more carbon atoms. Among these, it is preferable to contain a water-soluble solvent having a boiling point of 180°C or higher, from the viewpoint of controlling drying properties.

Examples of the water-soluble solvents having a boiling point in the range of 180 to 300°C include ethylene glycol, propylene glycol and dipropylene glycols, 1,3-propanediol, and glycerin.

[Non-Aqueous Solvent]

The precoat solution according to the present invention may contain, as a solvent, a non-aqueous solvent other than the water-soluble solvent having a boiling point in the range of 150 to 250 °C. Examples of the non-aqueous solvent include trimethylolpropane, triethylene glycol, and tetraethylene glycol.

(Surfactant)

The precoat liquid according to the present invention preferably includes a surfactant. The surfactant is not particularly limited, but for example, at least one selected from the group consisting of a polysiloxane-based surfactant and an acetylene glycol-based surfactant is preferable.

Among these, a polysiloxane-based surfactant is more preferable because the solubility in the precoat liquid is increased and foreign matter is less likely to be generated in the precoat liquid.

The polysiloxane-based surfactants are not particularly limited, and for example, TEGOWET-KL245 (polyether-modified siloxane copolymer; manufactured by Evonik Operations GmbH), BYK-347 (manufactured by Byk-Chemie GmbH), BYK-348 (manufactured by Byk-Chemie GmbH), BYK-349 (manufactured by Byk-Chemie GmbH), BYK-3550 (manufactured by Byk-Chemie GmbH), and BYK-UV3510 (manufactured by Byk-Chemie GmbH) can be used.

In addition, the acetylene glycol-based surfactants are not particularly limited, but, for example, one or more selected from alkyleneoxide adducts of 2,4,7,9-tetramethyl-5-decyne-4,7-diol and 2,4,7,9-tetramethyl-5-decyne-4,7-diol, and alkyleneoxide adducts of 2,4-dimethyl-5-decyne-4-ol and 2,4-dimethyl-5-decyne-4-ol are preferable.

These are available as commercial products such as Olfine 104 series and E series such as Olfine E1010 (manufactured by Air Products Japan, Inc), Olfine PD-002W, Surfynol 465 and Surfynol 61 (manufactured by Nissin Chemical Industries, Ltd. (Nissin Chemical Industry CO., Ltd)).

The content of the surfactant is preferably in a range of 0.1 to 10 % by mass with respect to 100 % by mass of a total mass of the reaction liquid.

(Other Constituent Components)

The precoat liquid according to the present invention may appropriately contain water, a crosslinking agent, an antifungal agent, a fungicide, and other components as long as the effects of the present invention are not impaired.

Furthermore, various known additives can also be contained, for example, ultraviolet absorbers described in JP S57-74193A, S57-87988A and S62-261476A, anti-fading agents, and various anionic, cationic or nonionic surfactants described in JP S57-74192A, S57-87989A, S60-72785A, S61-146591A, H01-95091A, H03-13376A, and the like, fluorescent whitening agents, antifoaming agents, lubricants such as ethylene glycol, preservatives, thickeners, and antistatic agents described in JP S59-42993A, S59-52689A, S62-280069A, S61-242871A and H04-219266A, and the like.

(13.2) Physical Property of Precoat Liquid

(Complex dielectric constant)

It is preferable that the complex dielectric constant of the precoat liquid according to the present invention is equal to or higher than the complex dielectric constants of the first ink and the second ink from the viewpoint of improving the drying properties of the mixed coating film of the precoat liquid, the first ink, and the second ink, forming uniform dots without graininess, and improving gloss and color gamut. The details of the complex dielectric constant are as described in Physical Property of Ink.

(Viscosity, Surface Tension, and the Like)

The physical properties of the precoat liquid according to the present invention are not particularly limited and may be appropriately selected depending on the intended purpose. For example, the viscosity of the precoat liquid at 25°C is preferably

within a range of 5 to 30 mPa · s from the viewpoint of achieving good ejection stability from a nozzle of the inkjet head.
The surface tension of the precoat liquid is preferably in a range of 1 to 55 mN/m at 25°C from the viewpoint that the ink is appropriately leveled on the recording medium and the drying time of the ink is shortened.

(1.3.3) Precoat Liquid Application Method

The method of applying the precoat liquid onto the base material is not particularly limited, but preferred examples thereof include an inkjet method, a roller coating method, a curtain coating method, and a spray coating method.
As an embodiment of the present invention, it is preferable to apply the precoat liquid by the inkjet method from the viewpoint of freely controlling the amount and the application range of the precoat liquid. For this, for example, a printer including an inkjet head filled with a precoat liquid can be used.
Examples of the ink having a low complex dielectric constant close to insulating properties include a yellow ink (Y), a magenta ink (M), and a cyan ink (C), and examples of the ink having a high complex dielectric constant include a black ink (K) and a white ink (W). An ink containing a highly conductive metal oxide or metal also has a high complex dielectric constant.
Here, by appropriately controlling the applied amount of the precoat liquid according to the present invention by a method such as the inkjet method in accordance with the applied amount of the ink having a low complex dielectric constant close to insulating properties and the applied amount of the ink having a high complex dielectric constant, the ink having a high complex dielectric constant is not excessively dried as compared with the ink having a low complex dielectric constant close to insulating properties, uniform drying control can be performed, and a high-quality printed material is obtained.

(1.4) Others

(1.4.1) Base Material

The base material (recording medium) applicable to the present invention is not particularly limited, and examples thereof include ink non-absorbent or low-absorbent base materials. In the present invention, since the microwave is used when the first ink and the second ink are dried, the base material which does not absorb the microwave does not generate heat. Therefore, damage to the base material can be suppressed.
In addition, since the drying of the first ink and the second ink is performed by the microwave, it is not necessary to dry the first ink and the second ink due to the condition under an atmosphere (the condition based on wind, temperature, or the like), and thus it is possible to prevent the nozzles from being dried at the time of inkjet application. Therefore, even when the base material is a resin film which is easily affected by heat, it is possible to ensure the ejection stability of the ink without damaging the base material.
Examples of the ink non-absorbent base material include a resin film which is not subjected to a surface treatment for inkjet printing (that is, an ink absorbing layer is not formed), a base material such as paper which is coated with a resin, and a base material to which a resin film is bonded.
Examples of the resin film include films of polyester such as polyethylene terephthalate (PET) and polyethylene naphthalate (PEN), polyethylene, polypropylene, cellophane, cellulose esters such as cellulose diacetate, cellulose triacetate (TAC), cellulose acetate butyrate, cellulose acetate propionate (CAP), cellulose acetate phthalate and cellulose nitrate or derivatives thereof, polyvinylidene chloride, polyvinyl alcohol, polyethylene vinyl alcohol, syndiotactic polystyrene, polycarbonate, norbornene resin, polymethylpentene, polyether ketone, polyimide, polyethersulfone (PES), polyphenylene sulfide, polysulfones, polyetherimide, polyether ketone imide, polyamide, fluororesin, nylon, polymethyl methacrylate, acrylic or polyarylates, cycloolefin resins such as ARTON (trade name, manufactured by JSR Corporation) or APEL (trade name, manufactured by Mitsui Chemicals, Inc).
Examples of the ink low-absorbent base material include printing paper such as art paper, coated sheet, and matte paper.
Here, in the present specification, the "ink non-absorbent and low-absorbent base material" refers to a "recording medium having a water absorption amount of 10 mL/m$^2$ or less from the start of contact to 30 msec$^{1/2}$ in the Bristow method". The Bristow method is the most widespread method as a method for measuring a liquid absorption amount in a short time, and is also adopted by the Japan Technical Association of the Pulp and Paper Industry (JAPAN TAPPI). Details of the test method are described in Standard No. 51 "Paper and Cardboard -Liquid Absorbency Test Method - Bristow Method" of "JAPAN TAPPI Paper Pulp Test Methods 2000".

(1.4.2) Inkjet head

The method of ejecting and applying an ink according to the present invention is preferably a method by an inkjet method.

In the image forming method of the present invention, microwaves are used when the ink is dried. Since the microwave has high directivity, it is not necessary to excessively apply conditions due to the atmosphere (conditions due to wind, temperature, or the like) to the drying control, and for example, a nozzle portion of the inkjet head which is a portion other than the ink is not unnecessarily dried. Therefore, excellent ink ejection property can be maintained, and the ink can be dried immediately after printing without worrying about nozzle drying.

(Water-repellent Film)

The inkjet head used in the inkjet method preferably has a water-repellent film. The water-repellent film is formed on the surface of the inkjet head on the ink ejection side to improve and maintain the ink ejection performance.

Here, the influence on the ejection performance of the inkjet head greatly depends on the surface characteristics of the liquid ejection face of the nozzles included in the inkjet head. Therefore, in general, a water-repellent film (also referred to as a "liquid-repellent film" or a "liquid-repellent layer") is formed on the surface of the ink ejection face of the nozzle to prevent the liquid from adhering to the peripheral portion of the nozzle, thereby making it possible to improve the ink ejection performance.

The water-repellent film according to the present invention is preferably formed by applying or depositing a fluorine-based silane coupling agent. The "fluorine-based silane coupling agent" is a silicon compound represented by $Y_nSiX_{4-n}$ (n = 1 to 3), wherein Y is a fluorine-containing group such as a fluoroalkyl group, and X is a group capable of forming a bond by condensation with a hydroxy group on the substrate surface or adsorbed water, such as a halogen, a methoxy group, an ethoxy group or an acetoxy group.

Specific examples thereof include perfluorooctylethyltrimethoxysilane, perfluorooctylethyltripropoxysilane, perfluorooctylethyltriaminosilane, and perfluorooctylethyltrichlorosilane.

As a method of forming the water-repellent film according to the present invention using the silane coupling agent, a method of applying a solution of the silane coupling agent, or immersing in a solution of the silane coupling agent, followed by drying, and a method of spraying the silane coupling agent are used.

As the solvent of the fluorine-based silane coupling agent, one selected from the group consisting of isopropyl alcohol, acetone, and fluorine-based alcohols such as hydrofluoroether, perfluoropolyether, hydrofluorocarbon, perfluorocarbon, and hydrofluoropolyether is used. As the silane coupling agent, specifically, OPTOOL manufactured by Daikin Industries, Ltd., WR4 manufactured by Merck, FG-5080 and FG-5010 manufactured by Fluoro Technology Inc, and the like can be used.

The water-repellent film according to the present invention may contain a Group 4 or Group 5 element, a nitrogen element, and an oxygen element. Examples of the Group 4 element include titanium (Ti), zirconium (Zr), and hafnium (Hf). Examples of the Group 5 element include vanadium (V), niobium (Nb), and tantalum (Ta), and among these, tantalum (Ta), titanium (Ti), and zirconium (Zr) are preferable, and tantalum (Ta) is particularly preferable.

[Method for forming Water-repellent Film]

As a method of forming the water-repellent film, for example, a thin film forming method such as a wet method or a dry method can be appropriately selected. As the wet method, spray coating, spin coating, brush coating, dip coating, wire bar coating, or the like can be used. Examples of the dry method (a general term for the vacuum film-forming method) include physical vapor deposition (PVD) and chemical vapor deposition (CVD). Examples of the physical vapor deposition (PVD) include a resistance heating vacuum deposition method, an electron beam heating vacuum deposition method, an ion plating method, an ion beam assisted vacuum deposition method, and a sputtering method. Examples of the chemical vapor deposition (CVD) method include plasma CVD, thermal CVD, metal organic CVD, and photo CVD.

It is preferable that the water-repellent film is a vapor deposition film from the viewpoint of adhesion between the water-repellent film and the base material and manufacturability. Note that in the present specification, the term "vapor-deposited film" refers to a film formed by vapor deposition, that is, a film formed by the above-described physical vapor deposition (PVD) or chemical vapor deposition (CVD).

A plasma treatment may be performed as a pretreatment for formation of the water-repellent film. As the plasma treatment, plasma treatment using an oxygen gas, an argon gas, or a mixed gas thereof can be performed. The plasma treatment provides a surface decontamination effect or a surface activation effect on the primer layer, improves reactivity and adhesion, and can increase alkali resistance and durability against chemical mechanical polishing.

[Contact Angle]

In the present invention, the term "contact angle" quantifies the degree of wetting, and is defined as an angle formed between a liquid surface and a solid surface (an angle inside a liquid) at a position where a free surface of a stationary liquid is in contact with a solid wall.

The wettability of a liquid with respect to a solid surface (including a semi-solid state) is generally expressed quantitatively by the contact angle of the liquid. As described above, the inkjet head used in the inkjet method preferably has a water-repellent film, which improves and maintains the ink ejection performance. As long as the wettability of ink with respect to the water-repellent film is suppressed to be low, the ink does not wet the inkjet head and then dries, thereby preventing the nozzles from being easily clogged.

From such a viewpoint, when the contact angles of the first ink and the second ink with respect to the water-repellent film are in the range of 60 to 80° at 25°C, the ink can be prevented from adhering to the nozzle surface by appropriately cissing and drying on the head surface. As a result, the ink has satisfactory ejection property.

An independently driven inkjet head manufactured by Konica Minolta, Inc., Japanese Unexamined Patent Publication No. 2018-202768, was used as an inkjet head having a water-repellent film, and the contact angles with respect to the water-repellent film of the inkjet head were measured. The contact angles at 25°C with respect to the precoat liquid [P1], the yellow ink [Y1], the magenta ink [M1], the cyan ink [C1], and the black ink [K1] prepared in examples described later were as follows.

Precoat liquid [P1]: Contact angle at 25°C is 65°
Yellow ink [Y1]: Contact angel at 25°C is 75°
Magenta ink [M1]: Contact angel at 25°C is 76°
Cyan ink [C1]: Contact angle at 25°C is 74°
Black ink [K1]: Contact angle at 25°C is 75°

Note that the measurement of the contact angle according to the present invention was performed as follows.

The nozzle plate on which the water-repellent film was formed was peeled off from the inkjet head having the water-repellent film. An ink was dropped onto the water-repellent film formed on the nozzle plate, and the contact angles at 25°C after 60 ms were measured. For the measurement of the contact angles, a DM500 water-contact angle meter manufactured by Kyowa Interface Science Co., Ltd. was used.

(Circulation Mechanism)

By providing the inkjet head with the nozzle circulation mechanism, it is possible to expect the effects of removing air bubbles in the pressure chamber, preventing sedimentation of particles in the ink, reducing the amount of ink discarded at the time of initial introduction, and preventing decap. Therefore, it is preferable from the viewpoint of ejection stability of the first ink and the second ink.

In the inkjet technology, it is important to stably maintain a satisfactory ejection state for a long period of time, and in a case where ejection failure occurs, it is necessary to perform maintenance for a long period of time in the conventional technology. However, since the inkjet head according to the present invention includes the nozzle circulation mechanism, it is not necessary to perform maintenance.

A typical inkjet head has a structure in which a circulation channel is provided only on one side, and therefore, a problem is likely to occur in which ink cannot be discharged due to a cause such as ink staying on the other side. In contrast, the "nozzle circulation mechanism" according to the present invention refers to a mechanism in which circulation channels are provided at both ends of an ink channel and one of the circulation channels is for ink discharge.

In the inkjet head including the nozzle circulation mechanism according to the present invention, the ink in the ink channel and the nozzle is refreshed by constantly discharging the ink from the circulation channel communicating with the ink channel, and it is possible to suppress the ejection failure due to the particle sedimentation, the ink drying in the nozzle, and the air bubble.

It is preferable that the inkjet head includes at least one pressure chamber into which the ink is injected, a pressure generating unit which generates pressure fluctuation of the pressure chamber, a nozzle which communicates with the pressure chamber and serve as a channel of the ink ejected from the pressure chamber to the outside by the pressure fluctuation of the pressure chamber, and a circulation path which communicates with the pressure chamber and discharges the ink inside the nozzle and returns the ink to an injection path to the pressure chamber, and there are two or more circulation paths from the viewpoint of ejection stability of the first ink and the second ink to further improve the performance of the nozzle circulation mechanism.

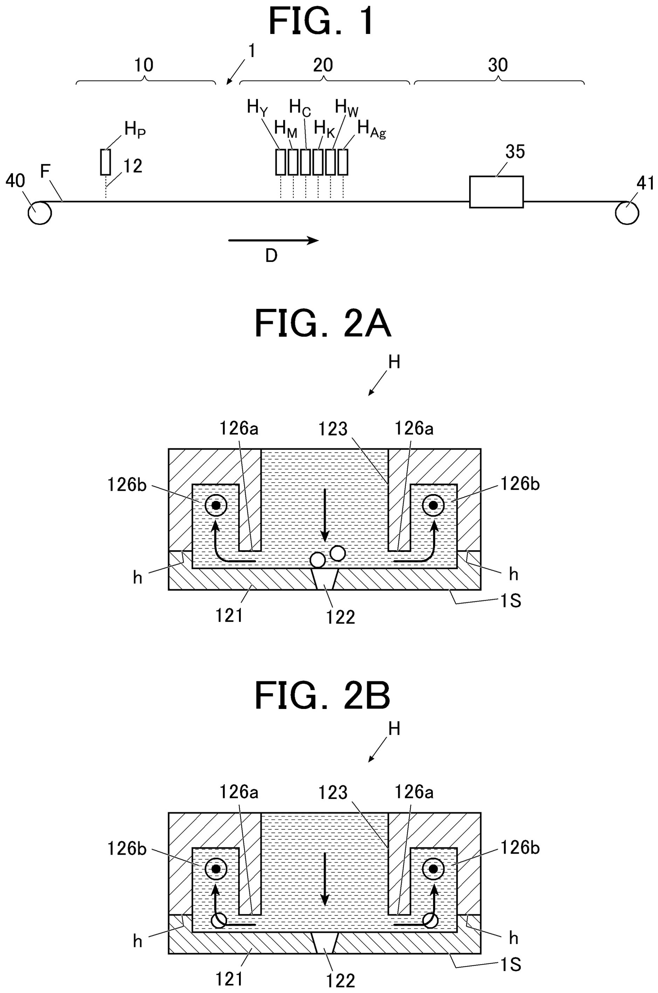

FIG. 2 is a cross-sectional view conceptually showing the maintenance operation of the circulation type inkjet head H, and shows the maintenance operation for controlling the ink discharge pressure by the return pressure control pump (not illustrated). In FIG. 2, 121 represents a nozzle plate, 122 represents a nozzle, 123 represents an ink channel (pressure chamber), 126a represents an individual ink circulation path, and 126b represents a common ink circulation path. Further, h represents a groove, and 1S represents an ink ejection face.

The individual ink circulation path 126a is communicated with the ink channel (pressure chamber) 123. The individual ink circulation path 126a communicating with the ink channel (pressure chamber) 123 joins together by communicating with the common ink circulation path 126b. Due to a difference in pressures between the inside of the ink channel (pressure chamber) 123 and the inside of the common ink circulation path 126b, a flow of ink from the ink channel (pressure chamber) 123 to the common ink circulation path 126b occurs.

Although not illustrated, a partition wall between the ink channel (pressure chamber) 123 and a dummy channel (not illustrated) is constituted by a pair of piezoelectric elements. The piezoelectric element is subjected to shear deformation by application of a voltage from a power supply circuit (not illustrated) via the FPC board and the wiring pattern of the wiring board. When the piezoelectric element forming both walls of the ink channel (pressure chamber) 123 is shear-deformed, pressure fluctuation (pressure reduction due to expansion or pressure increase due to contraction) of the ink channel (pressure chamber) 123 occurs. Due to the pressure fluctuation (pressure reduction or pressure increase) in the ink channel (pressure chamber) 123, pressure is applied to the inside relative to the nozzle 122, that is, the ink in the ink channel (pressure chamber) 123, and this ink is ejected through the nozzle 122.

The maintenance operation generates a negative pressure greater than the meniscus break head value by the return pressure control pump to strengthen the ink discharge pressure, and draws all of the ink staying in the nozzle 122 into the ink channel (pressure chamber) 123, as illustrated in FIG. 2A. At this time, the meniscus of the ink staying in the nozzle 122 is broken and the ink is moved into the ink channel (pressure chamber) 123, so that the nozzle 122 becomes empty. At this time, outside air is often drawn as air bubbles from the nozzle 122 into the ink channel (pressure chamber) 123 together with the ink.

The outer periphery of the meniscus (curved interface) formed by the ink in the nozzle 122 is normally fixed to the peripheral edge (edge portion) on the outlet side of the nozzle 122. Therefore, the destruction of the meniscus means that the outer periphery of the meniscus deviates from the peripheral edge on the outlet side of the nozzle 122. When the meniscus is destroyed in this way, its shape is also often not maintained as a smoothly curved surface, and at this time, outside air is drawn as air bubbles.

Thereafter, when the ink discharge pressure is returned to the normal level, the meniscus formed by the ink in the nozzle 122 is restored as shown in FIG. 2B. When the meniscus is restored in this way, the ink staying in the nozzle 122 is sufficiently replaced with new ink in the ink channel (pressure chamber) 123.

In a case where a state in which ink is not ejected onto a recording medium (non-printing state) continues, the maintenance operation is repeatedly performed at a predetermined constant cycle. By repeatedly performing the maintenance operation at a predetermined constant cycle, sedimentation of the particles in the ink in the nozzle 122 and an increase in the viscosity of the ink are prevented.

Through the maintenance operation as described above, one or both of the ink injection pressure and the ink discharge pressure are controlled to break a meniscus formed by ink staying in the nozzle 122, move the ink to a surrounding portion of an ejection-side outlet of the nozzle 122 or to the inside of the nozzle 122 (in the pressure chamber 123), and then restore the meniscus, thereby replacing at least a part of ink staying in the nozzle 122 with ink inside of the nozzle 122 (in the pressure chamber 123).

Examples of the inkjet head as described above include the inkjet head of Japanese Unexamined Patent Publication No. 2018-202768, which can be suitably used in the image forming method of the present invention.

2. Image forming system

The image forming system of the present invention is an image forming system having an applying means and a drying means of an ink, wherein the ink contains at least one or more of a pigment, inorganic particles, organic particles, and a resin, and water and a water-soluble solvent, the applying means of the ink is a means of ejecting and applying at least a first ink and a second ink onto a base material,

at least one drying means of the drying means is a means of drying a coating film by irradiating it with microwaves, when the complex dielectric constants of the first ink and the second ink at a drying rate of 95% are defined as $\varepsilon''1$ and $\varepsilon''2$, respectively, the $\varepsilon''1$ and $\varepsilon''2$ satisfy the following formula (1),

$$\text{Formula (1): } \varepsilon''1 < \varepsilon''2$$

and when the drying rates of the first ink and the second ink dried at 80°C for 20 seconds are defined as D1 and D2, respectively, the D1 and D2 satisfy the following formula (2),

$$\text{Formula (2): } D2 < D1.$$

The applying means of an ink according to the present invention is not particularly limited, and a conventionally known applying device that can apply the first ink and the second ink described in the above-described image forming method can be used.

Furthermore, the drying means of an ink according to the present invention is also not particularly limited, and a conventionally known drying apparatus that can realize the drying method described in the above-described image forming method can be used.

3. Recording apparatus

A recording apparatus that can be used in the image forming method and the image forming system of the present invention is a recording apparatus having an applying means and a drying means of an ink, and may have an applying means of a precoat liquid before the applying means of the ink.

FIG. 1 is a schematic diagram of an example of a recording apparatus preferable for the present invention. However, the present invention is not limited thereto.

(3.1) Configuration of Recording Apparatus

The recording apparatus 1 is mainly composed of a precoat liquid applying section 10, an ink applying section 20, and an ink drying section 30.

In the recording apparatus 1 of FIG. 1, for example, in the precoat liquid applying section 10, the precoat liquid 12 is coated on the base material F fed from a feeding roller 40 by the inkjet head Hp as necessary.

Next, in the ink applying section 20, the first ink 21 is applied from the inkjet head $H_Y$, $H_M$, $H_C$, and the second ink 22 is applied from the inkjet head $H_W$, $H_K$ and $H_{Ag}$ onto the precoat liquid 12 or the base material F.

Thereafter, in the ink drying section 30, the drying device 35 applies at least microwaves to the area coated with the precoat liquid 12, the first ink 21, and the second ink 22 to heat and dry the area, thereby performing uniform drying control and image recording.

Thereafter, the base material F on which the image has been recorded as described above is wound up by a winding roller 41, and an image recorded product is obtained.

Although FIG. 1 shows the case where the base material F is a film base material, in the case of a metal base material or the like, a mixed coating film before drying can be formed by placing the metal base material on a conveyance belt and applying the precoat liquid 12, the first ink 21, and the second ink 22 in one pass while conveying the belt.

In the present invention, since the precoat liquid 12 might not be applied, the above-described precoat liquid applying section 10 can be omitted, but the following description will be given assuming that the precoat liquid applying section 10 is present.

(3.2) Precoat Liquid Applying Section

As the precoat liquid 12, the precoat liquid described in the image forming method can be used.

As an image recording procedure, first, the precoat liquid 12 is applied onto the base material F in the precoat liquid applying section 10. At this time, if necessary, the coating film of the precoat liquid formed in the area where the precoat liquid 12 is applied may be partially dried.

The method for applying the precoat liquid in the precoat liquid applying section 10 is not particularly limited as long as the method can apply the precoat liquid 12 to the base material, and may be a roll coater method using a bar coater or the like, but is preferably an inkjet method using an inkjet head Hp from the viewpoint of drying control.

(3.3) Ink Applying Section

As described above, the type of the ink according to the present invention varies depending on its purpose in terms of, for example, the content ratio of the pigment, the resin, the water, the water-soluble solvent, and the surfactant, and the complex dielectric constant in the later drying stage, that is, the complex dielectric constant of each ink at a drying rate of 95% in the present invention varies.

Therefore, the ink (first ink) having a relatively small complex dielectric constant in the later drying stage as compared with other inks is excellent in uniform drying control when the drying rate of the ink is relatively large. In addition, the ink (second ink) having a relatively large complex dielectric constant in the later drying stage as compared with the first ink is excellent in uniform drying control when the drying rate of the ink is relatively small.

In the present invention, a plurality of kinds of inks having different components, contents, and the like are used as described above. For example, when two kinds of inks are focused, one of the inks is referred to as a first ink and the other is referred to as a second ink. The first ink and the second ink are characterized in that, as described above, their complex dielectric constants and drying rates in their later drying stages are relatively different from each other.

The first ink and the second ink may be applied not only to the same portion on the base material, but also to different portions.

In FIG. 1, the method of applying the first ink 21 and the second ink 22 in the ink applying section 20 is an inkjet method using inkjet heads $H_Y$, $H_M$, $H_C$, $H_W$, $H_K$ and $H_{Ag}$. A yellow ink is ejected from the inkjet head $H_y$, a magenta ink is ejected from the inkjet head $H_M$, a cyan ink is ejected from the inkjet head $H_C$, a white ink is ejected from the inkjet head $H_W$, a black ink is ejected from the inkjet head $H_K$, and a silver nanoparticle-containing ink is ejected from the inkjet head $H_{Ag}$.

In FIG. 1, the precoat liquid 12 is applied onto the base material F prior to the first ink 21 and the second ink 22, but the first ink and the second ink may be applied onto the base material F prior to the precoat liquid in a configuration other than FIG. 1.

In the ink applying section 20, the ink 21 and the ink 22 are applied in a desired range on the base material F, or the ink 21 and the ink 22 are applied in a desired range on the precoat liquid 12.

The first ink 21 and the second ink 22 may be a plurality of, and either of them may be applied first, but the first ink 21 or the second ink 22 is applied immediately after the application of the first ink 21 or the second ink 22. At this time, on the base material F, for example, an area where each of the precoat liquid 12, the first ink 21, and the second ink 22 is applied alone and an area where each of them is applied in a mixed manner in a different combination may be present.

In the ink applying section 20, yellow ink, magenta ink, cyan ink, white ink, black ink, silver nanoparticle-containing ink, and the like are applied in various combinations, and are collectively dried in an ink drying section to be described later. At this time, the first ink and the second ink are determined by the relative relationship between the complex dielectric constants and the drying rates of these inks.

For example, when the yellow ink, the magenta ink, the cyan ink, and the black ink are applied in the ink applying section 20, the yellow ink, the magenta ink, and the cyan ink are the first ink, and the black ink is the second ink. In a case where the yellow ink, the magenta ink, the cyan ink, and the white ink are applied, the yellow ink, the magenta ink, and the cyan ink are the first ink, and the white ink is the second ink. In a case where the white ink and the black ink are applied, the white ink is the first ink and the black ink is the second ink.

For example, when the yellow ink, the magenta ink, the cyan ink, and the black ink are applied in the ink applying section 20, the first ink and the second ink are determined.

(3.4) Ink Drying Section

In the ink drying section 30, the precoat liquid, the first ink, and the second ink applied onto the base material are dried by the drying device 35. The drying device 35 is not particularly limited as long as it can realize the drying method described in the image forming method above. In the present invention, the above drying device 35 dries the coating film formed by the precoat liquid, the first ink, and the second ink by irradiating at least microwaves.

(3.5) Others

Furthermore, as an apparatus other than the recording apparatus illustrated in FIG. 1, a flatbed type printer is also preferably used for the application of the precoat liquid 12, the first ink 21, and the second ink 22. In the flatbed type printer, the base material is fixed, the inkjet head can be moved in a main scanning direction and a sub-scanning direction intersecting the main scanning direction, and printing can be performed without conveyance of the base material.

Since a metal base material such as tin plate cannot be roll-to-roll conveyed unlike a resin film base material, it is preferable to use the flatbed type printer in which the base material does not need to be conveyed. Examples of the flatbed type printer include printers described in FIG. 1 of JP 2015-74161A and FIG. 1 of JP 2017-177578A.

Note that the inkjet head may be any one of an on-demand inkjet head and the continuous inkjet head. Examples of the on-demand type inkjet head include an electro-mechanical conversion type including a single cavity type, a double cavity type, a bender type, a piston type, a share mode type, and a shared wall type, and an electrothermal conversion type including a thermal inkjet type and a bubble jet ("bubble jet" is a registered trademark of Canon Inc.) type.

Among the inkjet heads described above, an inkjet head using a piezoelectric element as an electric element (also referred to as a piezo-type inkjet head) used in the electro-mechanical conversion type is preferable.

In addition, the inkjet printer may have an inkjet head of either a scanning type or a single pass type, and in the case of the single pass type, it is preferable to use an inkjet head of a line head type.

The inkjet head of the line head type refers to an inkjet head having a length equal to or greater than a width of the printing range (including an application range of the precoat liquid). As the inkjet head of the line head type, one head that is equal to or wider than the width of the printing range (including an application range of the precoat liquid) may be used, or a plurality of heads may be combined to be configured to be equal to or wider than the width of the printing range (including the application range of the precoat liquid). In addition, a plurality of heads may be provided so that nozzles are arranged in a staggered pattern, and the resolution of these heads as a whole may be increased.

Conveyance speed of the recording medium as the base material can be set within a range of, for example, 1 to 120 m/min. As the conveyance speed increases, the image forming speed increases.

Examples

Hereinafter, the present invention will be specifically described with reference to examples, but the present invention is not limited thereto. In Examples, "part(s)" or "%" means "parts by mass" or "% by mass" unless otherwise specified.

A. Preparation of Precoat Liquid

(A.1) Preparation of Precoat Liquid [P1]

3.00% by mass of calcium acetate-monohydrate as an aggregating agent, 12.00% by mass of dipropyleneglycol (DPG) and 20.00% by mass of propyleneglycol (PG) (1,2-HDO) as solvents, 1.00% by mass of "TEGOWET-KL245" (polyether-modified siloxane copolymer; manufactured by Evonik Operations GmbH) as a surfactant, 0.10% by mass of "Proxel GXL (S)" (1,2-benzisothiazolin-3-one; manufactured by Daiwa Dyestuff Mfg. Co., Ltd.) as an antifungal agent and ion-exchanged water (balance; in an amount such that the total amount becomes 100% by mass) were added with stirring, and the obtained mixture was filtered through a 1μm filter to prepare a precoat liquid [P1]. The formulation of the precoat liquid [P1] is summarized in Table I below. Note that the abbreviations in Table I are as follows.

[Table 1]

TABLE I

| Precoat liquid | Coagulant | | Solvent | | Surfactant | | Preservative Proxel GXL | Water |
|---|---|---|---|---|---|---|---|---|
| P1 | Calcium acetate | 3.00 | DPG | 12.00 | KL245 | 1.00 | 0.1 | Remainder |
| | | | PG | 20.00 | | | | |

The numerical values in the table represent percentages by mass.

<Abbreviation>

(Aggregating Agent)
"calcium acetate": calcium acetate monohydrate
(Solvent)

"DPG": dipropylene glycol
"PG": propylene glycol

(Surfactant)
"KL245": TEGOWET-KL245 (polyether-modified siloxane copolymer; manufactured by Evonik Operations GmbH)
(Antifungal Agent)
"Proxel GXL": "Proxel GXL (S)" (1,2-benzisothiazolin-3-one; manufactured by Daiwa Dyestuff Mfg. Co., Ltd).

B. Preparation of Pigment Dispersion Liquid to be Contained in Each Ink

(B.1) Preparation of White Pigment Dispersion Liquid [W]

To 40% by mass of a white pigment (titanium dioxide CR-50-2, manufactured by Ishihara Sangyo Kaisya, Ltd.) as the pigment, 4% by mass of "Joncryl 819" (anionic polymer dispersant, acrylic dispersant having dimethylaminoethanol-neutralized carboxy groups, acid number 75 mgKOH/g, solids content 20% by mass, manufactured by Basf SE) and 4% by mass of "Disperbyk -2019" (solventless wetting dispersant, manufactured by Byk-Chemie GmbH) as the pigment dispersant, 20% by mass of propylene glycol (PG) as the solvent, 0.1% by mass of 1,2-benzisothiazolin-3-one (Proxel GXL (S)) as the antifungal agent, and ion-exchanged water (the balance being made up to 100% by mass) were added and premixed.

Thereafter, 0.3 mm zirconia beads were dispersed using a bead mill filled with 50% by volume to prepare a white pigment dispersion liquid [W] having a pigment content of 20% by mass.

The average particle size of the pigment particle contained in the pigment dispersion liquid was 250 nm. Note that the mean particle size was measured with "Zetasizer Nano S-90" manufactured by Malvern Panalytical Ltd.

(B.2) Preparation of Magenta Pigment Dispersion Liquid [M]

The magenta pigment dispersion liquid [M] having a pigment content of 20% by mass was prepared in the same manner as the white pigment dispersion liquid [W] except that the pigment was changed to a magenta pigment (mixed crystal of Pigment Red 122 and Pigment Violet 19) and only "Joncryl 819" was added as the pigment dispersant in an amount of 8% by mass.

The average particle size of the pigment particles contained in the pigment dispersion liquid was 250 nm.

Note that the mean particle size was measured with "Zetasizer Nano S-90" manufactured by Malvern Panalytical Ltd.

(B.3) Preparation of Yellow Pigment Dispersion Liquid [Y], Cyan Pigment Dispersion Liquid [C], and Black Pigment Dispersion Liquid [K]

The yellow pigment dispersion liquid [Y], the cyan pigment dispersion liquid [C], and the black pigment dispersion liquid [K] each having a pigment content of 20% by mass were prepared in the same manner as the magenta pigment dispersion liquid [M] except that the magenta pigments were changed to a yellow pigment (Pigment Yellow 150; manufactured by Lanxess Co., Ltd), a cyan pigment (Pigment Blue 15; manufactured by Tokyo Chemical Industry Co., Ltd.), and a black pigment (Pigment Black 7; manufactured by Mitsubishi Chemical Corporation), respectively.

The average particle size of the pigment particles contained in the above pigment dispersion liquid was 250 nm in all of the above pigment dispersion liquids.

Note that the mean particle size was measured with "Zetasizer Nano S-90" manufactured by Malvern Panalytical Ltd.

(B.4) Preparation of Silver Nanoparticle Pigment Dispersion Liquid [Ag]

A silver nanoparticle pigment dispersion liquid ("Picosil R"; manufactured by Daicel Corporation) was adjusted with water to prepare a silver nanoparticle dispersion liquid [Ag] having a pigment content of 20% by mass.

C. Preparation of Ink

(C.1) Preparation of White Ink

To 40.00% by mass of the white pigment dispersion liquid [W] as the pigment dispersing liquid, 5.00% by mass (on a solids basis) of Plascoat Z- 446 (manufactured by Goo Chemical Co., Ltd) as the resin fine particle dispersion liquid, 15.00% by mass of propylene glycol (PG) as the water-soluble solvent, 10.00% by mass of dipropylene glycol (DPG) as the moisturizer, 1.00% by mass of "TEGOWET-KL245" (polyether-modified siloxane copolymer; manufactured by Evonik Operations GmbH) and 0.05% by mass of silicone-modified surfactant KF-351A (manufactured by Shin-Etsu Silicone) as the surfactant, 0.10% by mass of "Proxel": "Proxel GXL (S)" (1,2-benzisothiazolin-3-one; manufactured by Daiwa Dyestuff Mfg. Co., Ltd.) as the antifungal agent, and ion-exchanged water (balance: total amount is 100% by mass) were added while stirring, and the resulting mixture liquid was filtered through the 1-μm filter to prepare a white ink [W1].

There was no substantial composition change before and after the filtration.

(C.2) Preparation of Yellow, Magenta, Cyan, and Black Ink

The yellow ink [Y1], the magenta inks [M1] to [M8], the cyan ink [C1], and the black inks [K1] to [K20] were prepared in the same manner as the white ink [W1] except that types of the pigment dispersion liquid, the resin fine particle dispersion liquid, the water-soluble solvent, the moisturizer, and the surfactants, and types and the amounts of the antifungal agent and the water were changed as shown in Table II and Table III.

(C.3) Preparation of Silver Nanoparticle Containing Ink

To 20.00% by mass of the silver nanoparticle pigment dispersion liquid [Ag], 15.00% by mass of propylene glycol (PG) as the water-soluble solvent, 10.00% by mass of dipropyleneglycol (DPG) as the moisturizer, 1.00% by mass of "TEGOWET-KL245" (polyether-modified siloxane copolymer; manufactured by Evonik Operations GmbH) as the surfactant, 0.10% by mass of "Proxel": "Proxel GXL (S)" (1,2-benzisothiazolin-3-one; manufactured by Daiwa Dyestuff Mfg. Co., Ltd.) as the antifungal agent, and ion-exchanged water (balance: total amount is 100% by mass) were added with stirring, and the obtained mixed liquid was filtered through a 1-$\mu$m filter to prepare a silver nanoparticle-containing ink [Ag1]. There was no substantial composition change before and after the filtration.

The contents [% by mass] of the pigment dispersion liquid, the resin, the water-soluble solvent, the moisturizer, the surfactant, the preservative, and water in the ink are shown in Table II. Note that Plascoat Z-446 (manufactured by Goo Chemical Co., Ltd) was added as the resin fine particle dispersion liquid. The numerical value of "Pigment amount" in the pigment dispersion liquid in Table II is the amount added in terms of solid content. For example, in the yellow ink [Y1], by adding 20% by mass of the yellow pigment dispersion liquid [Y] having a solid component of 20% by mass, the content of the pigment becomes 4% by mass in terms of the solid component, and the numerical value is described. The numerical value of the resin Z-446 is an amount added in terms of solid content. Note that the abbreviations in Table II are as follows.

[Table 2]

TABLE II

| Ink | Pigment | | Resin Z-446 | Water-soluble solvent | | Water-soluble solvent | | Surfactant | | Preservative Proxel GXL | Preservative |
| | Type | Pigment amount | | | | | | | | | |
|---|---|---|---|---|---|---|---|---|---|---|---|
| Y 1 | Y | 4.0 | 5.0 | PG | 25.0 | DPG | 3.0 | KL245 | 1.0 | 0.1 | Remainder |
| M 1 | M | 4.0 | 5.0 | PG | 25.0 | - | - | KL245 | 1.0 | 0.1 | Remainder |
| M 2 | M | 4.0 | 5.0 | PG | 20.0 | - | - | KL245 | 1.0 | 0.1 | Remainder |
| | | | | Ethanol | 5.0 | | | | | | |
| M 3 | M | 4.0 | 5.0 | PG | 25.0 | DPG | 3.0 | KL245 | 1.0 | 0.1 | Remainder |
| M 4 | M | 4.0 | 5.0 | PG | 25.0 | DPG | 3.0 | SF-8428 | 1.0 | 0.1 | Remainder |
| M 5 | M | 4.0 | 5.0 | PG | 25.0 | DPG | 3.0 | E1010 | 1.0 | 0.1 | Remainder |
| M 6 | M | 4.0 | 5.0 | PG | 25.0 | PenD0 | 5.0 | E1010 | 1.0 | 0.1 | Remainder |
| M 7 | M | 4.0 | 5.0 | PG | 25.0 | Gly | 3.0 | E1010 | 1.0 | 0.1 | Remainder |
| M 8 | M | 4.0 | 5.0 | PG | 5.0 | - | - | KL245 | 1.0 | 0.1 | Remainder |
| | | | | Ethanol | 20.0 | | | | | | |
| C 1 | C | 4.0 | 5.0 | PG | 25.0 | DPG | 3.0 | KL245 | 1.0 | 0.1 | Remainder |
| W 1 | W | 4.0 | 5.0 | PG | 15.0 | DPG | 10.0 | KL245 | 1.0 | 0.1 | Remainder |
| K 1 | K | 4.0 | 5.0 | PG | 35.0 | - | - | KL245 | 1.0 | 0.1 | Remainder |
| K 2 | K | 4.0 | 5.0 | PG | 30.0 | - | - | KL245 | 1.0 | 0.1 | Remainder |
| K 3 | K | 4.0 | 5.0 | PG | 25.0 | - | - | KL245 | 1.0 | 0.1 | Remainder |
| | | | | HexDo | 10.0 | | | | | | |

(continued)

| Ink | Pigment | | Resin Z-446 | Water-soluble solvent | | Water-soluble solvent | | Surfactant | | Preservative Proxel GXL | Preservative |
| | Type | Pigment amount | | | | | | | | | |
|---|---|---|---|---|---|---|---|---|---|---|---|
| K 4 | K | 4.0 | 5.0 | PG | 25.0 | - | - | KL245 | 1.0 | 0.1 | Remainder |
| | | | | DEGBE | 5.0 | | | | | | |
| K 5 | K | 4.0 | 5.0 | PG | 25.0 | DPG | 3.0 | KL245 | 1.0 | 0.1 | Remainder |
| K 6 | K | 4.0 | 5.0 | PG | 15.0 | DPG | 10.0 | KL245 | 1.0 | 0.1 | Remainder |
| K 7 | K | 4.0 | 5.0 | PG | 5.0 | DPG | 20.0 | KL245 | 1.0 | 0.1 | Remainder |
| K 8 | K | 4.0 | 5.0 | PG | 15.0 | DPG | 10.0 | KL245 | 1.0 | 0.1 | Remainder |
| K 9 | K | 4.0 | 5.0 | PG | 5.0 | DPG | 20.0 | KL245 | 1.0 | 0.1 | Remainder |
| K10 | K | 4.0 | 5.0 | PG | 25.0 | Gly | 5.0 | KL245 | 1.0 | 0.1 | Remainder |
| K11 | K | 4.0 | 5.0 | PG | 25.0 | PD0 | 5.0 | KL245 | 1.0 | 0.1 | Remainder |
| K12 | K | 4.0 | 5.0 | PG | 25.0 | PenD0 | 5.0 | KL245 | 1.0 | 0.1 | Remainder |
| K13 | K | 4.0 | 5.0 | PG | 15.0 | DPG | 10.0 | SF-8428 | 1.0 | 0.1 | Remainder |
| K14 | K | 4.0 | 5.0 | PG | 15.0 | DPG | 10.0 | E1010 | 1.0 | 0.1 | Remainder |
| K15 | K | 4.0 | 5.0 | PG | 15.0 | PenD0 | 10.0 | E1010 | 1.0 | 0.1 | Remainder |
| K16 | K | 4.0 | 5.0 | PG | 25.0 | Gly | 6.0 | E1010 | 1.0 | 0.1 | Remainder |
| K17 | K | 6.0 | 5.0 | PG | 15.0 | DPG | 10.0 | KL245 | 1.0 | 0.1 | Remainder |
| K18 | K | 4.0 | 5.0 | PG | 25.0 | DPG | 5.0 | KL245 | 1.0 | 0.1 | Remainder |
| K19 | K | 4.0 | 5.0 | PG | 26.0 | DPG | 4.0 | KL245 | 1.0 | 0.1 | Remainder |
| K20 | K | 4.0 | 5.0 | PG | 5.0 | - | - | KL245 | 1.0 | 0.1 | Remainder |
| | | | | Ethanol | 20.0 | | | | | | |
| Ag1 | Ag | 4.0 | - | PG | 15.0 | DPG | 10.0 | KL245 | 1.0 | 0.1 | Remainder |

The numerical values in the table represent percentages by mass.

The numerical value of "Pigment amount" in the table is the amount added in terms of solids content.

For example, in the case of yellow ink [Y1], the addition of 20% by mass of the yellow pigment dispersion liquid [Y] having a solids content of 20% by mass results in a pigment amount of 4% by mass in terms of solids content, and the value is shown. The numerical value of "Resin Z-446" is the amount added in terms of solids content.

<Abbreviation>

(Resin Fine Particle Dispersion)
"Z-446": Plascoat Z-446 (manufactured by Goo Chemical Co., Ltd)
(Water-Soluble Solvent)

"PG": propylene glycol
"HexDo":1,2-hexanediol
"DEGBE": diethylene glycol monobutyl ether

(Moisturizer)

"DPG": dipropylene glycol
"PenDO":1,2-pentanediol
"Gly": glycerin

"PDO":1,3-propanediol

(Surfactant)

"KL245": TEGOWET-KL245 (polyether-modified siloxane copolymer; manufactured by Evonik Operations GmbH)
"SF-8428": SF-8428 (carbinol-modified silicone; manufactured by Dow Toray Co., Ltd)
"E1010": OLFINE E1010 (acetylene glycol; manufactured by Nissin Chemical Industry Co., Ltd)

(Antifungal Agent)
"Proxel GXL": Proxel GXL (S) (1,2-benzisothiazolin-3-one; manufactured by Daiwa Dyestuff Mfg. Co., Ltd.)

D. Complex Dielectric Constant and Boiling Point of Water, Water-Soluble Solvent, and Moisturizer

Numerical values of the complex dielectric constants and the boiling points of water, the water-soluble solvent, and the moisturizer are as listed in Table III.

[Table 3]

TABLE III

| Water, Water-soluble solvent and Moisturizer | | Complex dielectric constant (2450MHz, 25°C) | Boiling point [°C] |
|---|---|---|---|
| Name | Abbreviation | | |
| Ethylene glycol | EG | 50 | 198 |
| Propylene glycol | PG | 31 | 188 |
| Dipropylene glycol | DPG | 30 | 230 |
| 1,4-Butanediol | 1,4-BuD0 | 22 | 230 |
| Glycerin | Gly | 28 | 290 |
| Water | Water | 10 | 100 |
| 1,2-Pentanediol | 1,2-PenD0 | 20 | 242 |
| 1,2-Hexanediol | 1,2-HexDo | 16 | 170 |
| 1,5-Pentanediol | 1,5-PenD0 | 21 | 242 |
| 1,6-Hexanediol | 1,6-HexDo | 17 | 249 |
| 1,3-Propanediol | PD0 | 46 | 215 |
| Diethylene glycol monobutyl ether | DEGBE | 8 | 230 |

E. Measurement of Drying Rate and Complex Dielectric Constant of Each Ink

(E.1) Complex Dielectric Constant

The ink was applied to a PET base material ("FE2001", manufactured by Futamura Chemical Co., Ltd) at different positions with a wire bar in a coating amount of 13 g/m$^2$, and dried in a hot air oven at 80°C for 3 minutes to prepare a sample for measuring the complex dielectric constant of each ink.
The measurement of the drying rate and the complex dielectric constant of the ink will be described taking the yellow ink [Y1] as an example.
The yellow ink [Y1] was applied onto a PET base material (mass: 0.168g) cut into a 10 cm $\times$ 10 cm shape with a wire bar in an application amount of 13 g/m$^2$ to obtain a sample [Y1].
Immediately thereafter, the mass of the sample [Y1] was measured with an electronic balance and found to be 0.298 g, which was defined as the "mass before drying" of the sample [Y1].
The sample [Y1] was dried in a hot-air oven at 80°C for 3 minutes and then the mass thereof was measured again with the electronic balance, and 0.187 g was defined as the "mass after drying" of the sample [Y1].

Therefore, the mass of the yellow ink [Y1] evaporated by drying is the above-described "mass before drying" - "mass after drying".

Since the yellow ink [Y1] is applied onto the PET base material cut into a 10 cm × 10 cm shape in the application amount of 13 g/m$^2$, the total mass of the yellow ink [Y1] is 13 × 0.01 = 0.130 g.

Since 89.9% of the yellow ink [Y1] is solvent, the total mass of the solvent in the yellow ink [Y1] is 0.130 × 0.899 = 0.117 g.

When this was substituted into the following formula and the drying rate was calculated, it was 95%.

$$\text{Drying rate [\%]} = (\text{mass before drying - mass after drying})/\text{total mass of solvent in ink} \times 100$$

The complex dielectric constant of the sample [Y1] at a drying rate of the yellow ink [Y1] of 95% was measured using a material impedance analyzer MIA-5M (SH2-Z type 4-terminal sample holder) manufactured by TOYO Corporation. Table IV shows the measurement result of the complex dielectric constant.

(E.2) Drying Rate

The first ink and the second ink were applied to separate places on a PET substrate ("FE2001" manufactured by Futamura Chemical Co., Ltd) with a wire bar in a coating amount of 13 g/m $^2$, and dried in a hot air oven at 80°C for 20 seconds to prepare a sample for measuring the drying rate of each ink. The measurement result of the drying rate are shown in Table V.

The drying rate when the first ink and the second ink were dried at 80°C for 20 seconds was calculated by the following formula.

$$\text{drying rate [\%]} = (\text{mass before drying - mass after drying})/\text{total mass of solvent in ink} \times 100$$

[Table 4]

TABLE IV

| Ink | Complex dielectric constant *1 | Drying rate [%] *2 |
|---|---|---|
| | Value | Value |
| M 1 | 0.01 | 65 |
| M 2 | 0.01 | 75 |
| M 3 | 0.01 | 55 |
| M 4 | 0.02 | 55 |
| M 5 | 0.04 | 55 |
| M 6 | 0.04 | 55 |
| M 7 | 0.04 | 50 |
| M 8 | 0.01 | 100 |
| Y 1 | 0.01 | 55 |
| C 1 | 0.01 | 55 |
| W 1 | 0.04 | 40 |
| K 1 | 0.13 | 55 |
| K 2 | 0.13 | 60 |
| K 3 | 0.13 | 55 |
| K 4 | 0.13 | 55 |
| K 5 | 0.13 | 55 |

(continued)

| Ink | Complex dielectric constant *1 | Drying rate [%] *2 |
|---|---|---|
| | Value | Value |
| K 6 | 0.13 | 40 |
| K 7 | 0.13 | 20 |
| K 8 | 0.13 | 40 |
| K 9 | 0.13 | 20 |
| K10 | 0.13 | 40 |
| K11 | 0.13 | 45 |
| K12 | 0.13 | 45 |
| K13 | 0.13 | 40 |
| K14 | 0.13 | 40 |
| K15 | 0.13 | 40 |
| K16 | 0.13 | 35 |
| K17 | 0.20 | 40 |
| K18 | 0.13 | 50 |
| K19 | 0.13 | 52 |
| K20 | 0.13 | 100 |
| Ag1 | 0.34 | 40 |

*1: "Complex dielectric constant" in the table represents the complex dielectric constant of the ink at a drying rate of 95%.

* 2 : "Drying rate" in the table represents the drying rate when the ink was dried at 80° C for 20 seconds.

F. Image Formation Preparation 1

Image formation preparation was performed with the configuration of the recording apparatus as illustrated in FIG. 1. The conveyance direction of the base material was set to be the D direction in FIG. 1 and the conveyance speed was set to 300 mm/sec under an environment of 25°C and 50% RH, and a PP base material ("#20 FOR" manufactured by Futamura Chemical Co., Ltd) was used as the recording medium F.

In addition to a scanning printer equipped with five independently driven inkjet heads (360npi, ejection volume 6pL or 14pL, 1024 nozzles) ($H_W$, $H_Y$, $H_M$, $H_C$, $H_K$ ) manufactured by Konica Minolta, Inc. as disclosed in Japanese Unexamined Patent Publication No. 2018-202768, a scanning printer equipped with inkjet head $H_{Ag}$ for metallic nanoparticle-containing ink, that is, a total of six inkjet heads was prepared.

In addition, an inkjet head $H_P$ was prepared for applying the precoat liquid. The nozzle plate provided in each inkjet head has a water-repellent film.

(Image Formation Preparation of Example 1)

The inkjet head ($H_M$) used in the ink applying section 20 was filled with the magenta ink [M1], and the inkjet head ($H_K$) was filled with the black ink [K1].

(Image Formation Preparation of Examples 2 to 21 and Comparative Examples 1 and 2)

The inkjet heads suitable for the respective inks used in the ink applying section 20 were filled with the inks in the combinations listed in Table V.

(Image Formation Preparation of Example 22)

The inkjet head $H_P$ used in the precoat liquid applying section 10 was filled with the precoat liquid [P1]. In addition, the inkjet head (H$_M$) used in the ink applying section 20 was filled with the magenta ink [M3], and the inkjet head (H$_K$) was filled with the black ink [K8].

G. Image Formation Preparation 2

Image formation preparation was performed with the configuration of the recording apparatus as illustrated in FIG. 1. The preparation similar to the image formation preparation 1 was performed, but different from the image formation preparation 1, not only the drying method by microwave irradiation but also drying methods with hot air or an infrared rays heater was allowed to be performed in the drying device 35.

Image Formation Preparation of Example 23)

The inkjet head (H$_M$) used in the ink applying section 20 was filled with the magenta ink [M3], and the inkjet head (H$_K$) was filled with the black ink [K8].

(Image Formation Preparation of Examples 24 and 25)

The inkjet heads suitable for the respective inks used in the ink applying section 20 were filled with the inks in the combinations listed in Table V.

(Image Formation Preparation of Comparative Example 3)

The inkjet head (H$_M$) and the inkjet head (H$_K$) used in the ink applying section 20 were filled with the same ink as in Example 23.

(Image Formation Preparation of Comparative Example 4)

The inkjet head (H$_M$) and the inkjet head (H$_K$) used in the ink applying section 20 were filled with the same ink as in Example 23.

(Image Formation Preparation of Comparative Example 5)

The inkjet head (H$_M$) and the inkjet head (H$_K$) used in the ink applying section 20 were filled with the same ink as in Example 23.

(Image Formation Preparation of Comparative Example 6)

In the ink applying section 20, the inkjet head (H$_M$) was filled with the magenta ink [M8], and the inkjet head (H$_K$) was filled with the black ink [K20].

H. Image Formation and Various Evaluations

(Formation of Evaluation Image)

Image formation was performed using the recording apparatus having the configuration of FIG. 1.

< Image Forming Method 1 (Image Formation of Examples 1 to 21 and Comparative Examples 1 and 2) >

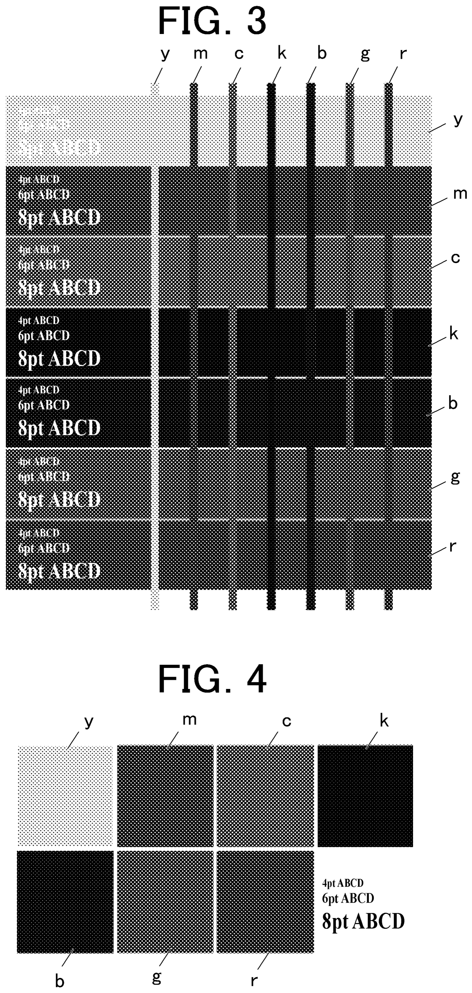

As the base material, a PP base material ("#20 FOR" manufactured by Futamura Chemical Co., Ltd) was used. In the precoat liquid applying section 10, no particular operation was performed, and each ink was ejected from each inkjet head in the ink applying section 20 in the combination shown in Table V in the application amount 13 g/m$^2$ to print a solid image, thereby printing an image formation pattern as shown in FIGs. 3 and 4.

Each of the image patterns in FIGs. 3 and 4 is mainly composed of a yellow solid area y, a magenta solid area m, a cyan solid area c, a black solid area k, a red solid area r, a green solid area g, and a blue solid area b.

The yellow solid area y, the magenta solid area m, the cyan solid area c, and the black solid area k, which were to be the primary color solid areas, were formed by applying only the yellow ink, the magenta ink, the cyan ink, and the black ink, respectively, as the ink.

The red solid area r, the green solid area g, and the blue solid area b, which were to be the secondary color solid areas, were each formed by applying two types of ink in an overlapping manner. The red solid area r was formed by superimposing the yellow ink and the magenta ink. The green solid area g was formed by superimposing the yellow ink and the cyan ink. The blue solid area b was formed by superimposing the magenta ink and the cyan ink.

FIG. 3 is an image pattern which is formed of the above-described respective color solid areas and in which places where the respective color solid areas are adjacent to each other and open letters (4pt, 6pt, 8pt) are drawn. In any of the recording methods, the application amount of ink in the image based on FIG. 3 was set to 13 $g/m^2$ in the primary color solid areas y, m, c, and k and to 13.0 $g/m^2$ in the secondary color solid areas r, g, and b.

FIG. 4 is an image pattern in which the solid areas of the respective colors are individually drawn. In any of the recording methods, the application amount of the ink in the image based on FIG. 4 was set to 13 $g/m^2$ in the primary color solid areas y, m, c, and k and to 13.0 $g/m^2$ in the secondary color solid areas r, g, and b.

Note that the white ink and the silver nanoparticle-containing ink were printed on the same portion as the black ink (k) in FIG. 3.

Thereafter, in the ink drying section 30, the ink was dried by microwave treatment in the drying device 35 to form an image for evaluation. As a drying device, a microwave generator (ESG-2450S-2A, manufactured by SPC Electronics Corporation) was used, and microwaves (oscillation frequency: 2.45 GHz, power: 100 W) were irradiated for 3 seconds for drying.

< Image Forming Method 2 (Image Formation of Example 22) >

As the base material, a PP base material ("#20 FOR" manufactured by Futamura Chemical Co., Ltd) was used. In the precoat liquid applying section 10, the precoat liquid [P1] was ejected and applied from the inkjet head $H_P$ at an application amount of 4 $g/m^2$. In the ink applying section 20 and the ink drying section 30, an evaluation image was formed by the same sequence as in the image forming method 1.

< Image Forming Method 3 (Image Formation of Examples 23 to 25) >

As the base material, a PP base material ("#20 FOR" manufactured by Futamura Chemical Co., Ltd) was used. In the precoat liquid applying section 10, no particular operation was performed, and in the ink applying section 20, a solid image was printed by the same sequence as in the image forming method 1. Thereafter, in the ink drying section 30, microwave treatment and hot air treatment were performed at the same time in the drying device 35 to dry the ink, thereby forming an image for evaluation. In the drying device 35, a microwave treatment (oscillation frequency: 2.45 GHz, power: 100 W) and a hot air treatment (temperature: 100°C, wind velocity: 16 m/sec) were performed for 3 seconds.

< Image Forming Method 4 (Image Formation of Comparative Examples 3 and 6) >

As the base material, a PP base material ("#20 FOR" manufactured by Futamura Chemical Co., Ltd) was used. In the precoat liquid applying section 10, no particular operation was performed, and in the ink applying section 20, a solid image was printed by the same sequence as in the image forming method 1. Thereafter, in the ink drying section 30, only a hot air treatment (temperature: 70°C, wind velocity: 16 m/sec) was performed for 3 seconds in the drying device 35 to dry the ink, thereby forming an image for evaluation.

< Image Forming Method 5 (Image Formation of Comparative Example 4) >

As the base material, a PP base material ("#20 FOR" manufactured by Futamura Chemical Co., Ltd) was used. In the precoat liquid applying section 10, no particular operation was performed, and in the ink applying section 20, a solid image was printed by the same sequence as in the image forming method 1. Thereafter, in the ink drying section 30, neither the microwave treatment nor the hot air treatment was performed in the drying device 35, and only the treatment with the infrared rays heater was performed for 3 seconds for drying, to form an image for evaluation. Note that the treatment with the infrared rays heater in the drying device was performed with a medium-wavelength infrared rays heater 100KW/$m^2$ manufactured by Heraeus K.K. under the condition that the gap between the heater and the base material was 20 mm.

< Image Forming Method 6 (Image Formation of Comparative Example 5) >

As the base material, a PP base material ("#20 FOR" manufactured by Futamura Chemical Co., Ltd) was used. In the precoat liquid applying section 10, no particular operation was performed, and in the ink applying section 20, a solid image was printed by the same sequence as in the image forming method 1. Thereafter, in the ink drying section 30, a treatment with an infrared rays heater was performed simultaneously with a hot air treatment in the drying device 35 to dry the ink, thereby forming an image for evaluation. In the drying device 35, hot air treatment (temperature: 100°C, wind velocity: 16 m/sec) and treatment with an infrared rays heater (with a medium-wavelength infrared rays heater 100KW/m$^2$ manufactured by Heraeus K.K., the gap with the base material: 20 mm) were performed for 3 seconds.

(H.1) Drying Property

(Evaluation Method)

As an evaluation method, an image as shown in FIG. 3 in each of Examples and Comparative Examples, which was formed as an image for evaluation, was rubbed 10 times on a solid portion of the corresponding color using BEMCOT AZ-8 manufactured by Asahi Kasei Corporation, and the drying property was evaluated. Evaluation was made according to the following evaluation criterion, and the case where the result was A or B was determined to be practical, and the case where the result was C was determined to be practically problematic. The evaluation results are shown in Table V.

(Evaluation Criterion)

A: There is no blur in the printed sample in both of the colors.
B: The surface of the printed sample is slightly blurred and the glossiness is reduced in both of the colors, and no color transfer occurs on BEMCOT.
C: One of the colors is blurred and come off. There is color transfer on BEMCOT.

(H.2) Base Material Damage

(Evaluation Method)

As the base material damage evaluation image, an image as illustrated in FIG. 3 was used. The sample was visually observed to evaluate whether or not there was deformation or shrinkage of the base material according to the following evaluation criterion, and the case where the result was A was regarded as having practicality, and the case where the result was C was regarded as having a practical problem. The evaluation results are shown in Table V.

(Evaluation Criterion)

A: There is no damage on the base material. There is no waviness when placed flat.
C: The base material is largely deformed in one of the colors. There is waviness when flatly placed.

(H.3) Ejection Property

(Evaluation Method)

The image as illustrated in FIG. 3 was continuously printed for 30 minutes and left to stand for 5 minutes repeatedly for 3 times, the final solid image of the third time was visually observed and the ejection property was evaluated according to the following evaluation criterion, and the case where the result was A or B was regarded as having practicality and the case where the result was C was regarded as having a practical problem. The evaluation results are shown in Table V.

(Evaluation Criterion)

A: There is no defect or bend (void).
B: There is one or less defect or bend.
C: A large number of defects and bends occurred.

(H.4) Image Quality

(Evaluation Method)

The images as shown in FIGs. 3 and 4 were printed, and the solid image patterns were visually observed to evaluate the graininess of the images. The white ink and the silver nanoparticle ink were printed at the position of the K ink and evaluated according to the following evaluation criterion. As the silver nanoparticle ink, "TEC-PA-010" (manufactured by InkTec Co.,Ltd.) was used.

(Evaluation Criterion)

A: The image has uniform dots and no graininess even in the low-density portion of the solid portion.
B: There is no graininess in the high-density portion of the solid portion, but there is some graininess in the low-density portion.
C: Graininess is strong as a whole.

[Table 5]

TABLE V

| Example or Comparative Example | Pr liquid applying step | Ink applying step | | | | Ink drying step | Evaluation | | | |
|---|---|---|---|---|---|---|---|---|---|---|
| | | First ink | Second ink | physical property value | | | Drying property | Base material damage | Ejection property | Image quality |
| | | | | $e''_{21}$ *3 | D difference *4 | | | | | |
| Example 1 | Absent | M 1 | K 1 | 13 | 10 | Microwave | B | A | B | B |
| Example 2 | Absent | M 2 | K 2 | 13 | 15 | Microwave | B | A | B | B |
| Example 3 | Absent | M 1 | K 3 | 13 | 10 | Microwave | B | A | B | B |
| Example 4 | Absent | M 1 | K 4 | 13 | 10 | Microwave | B | A | B | B |
| Example 5 | Absent | M 1 | K 5 | 13 | 10 | Microwave | B | A | B | B |
| Example 6 | Absent | M 1 | K 6 | 13 | 25 | Microwave | B | A | B | B |
| Example 7 | Absent | M 1 | K 7 | 13 | 45 | Microwave | B | A | B | B |
| Example 8 | Absent | M 3 | K 8 | 13 | 15 | Microwave | B | A | A | B |
| Example 9 | Absent | M 3 | K 9 | 13 | 35 | Microwave | B | A | A | B |
| Example 10 | Absent | M 3 | K10 | 13 | 15 | Microwave | B | A | A | B |
| Example 11 | Absent | M 3 | K11 | 13 | 10 | Microwave | B | A | A | B |
| Example 12 | Absent | M 3 | K12 | 13 | 10 | Microwave | B | A | A | B |
| Example 13 | Absent | M 4 | K13 | 7 | 15 | Microwave | A | A | A | A |
| Example 14 | Absent | M 5 | K14 | 3 | 15 | Microwave | A | A | A | A |
| Example 15 | Absent | M 6 | K15 | 3 | 15 | Microwave | A | A | A | A |
| Example 16 | Absent | M 7 | K16 | 3 | 15 | Microwave | A | A | A | A |
| Example 17 | Absent | M 3 | K17 | 20 | 15 | Microwave | B | A | A | B |
| Example 18 | Absent | M 3 | W 1 | 4 | 15 | Microwave | B | A | A | B |
| Example 19 | Absent | Y 1 | K 8 | 13 | 15 | Microwave | B | A | A | B |
| Example 20 | Absent | C 1 | K 8 | 13 | 15 | Microwave | B | A | A | B |
| Example 21 | Absent | M 3 | Ag1 | 34 | 15 | Microwave | B | A | A | B |

(continued)

| Example or Comparative Example | Pr liquid applying step | Ink applying step | | physical property value | | Ink drying step | Evaluation | | | |
|---|---|---|---|---|---|---|---|---|---|---|
| | | First ink | Second ink | $e''_{21}$ *3 | D difference *4 | | Drying property | Base material damage | Ejection property | Image quality |
| Example 22 | Present | M 3 | K 8 | 13 | 15 | Microwave | A | A | A | A |
| Comparative Example 1 | Absent | M 3 | K 5 | 13 | 0 | Microwave | B | C | A | B |
| Comparative Example 2 | Absent | M 4 | K 5 | 7 | -5 | Microwave | B | C | A | B |
| Example 23 | Absent | M 3 | K 8 | 13 | 15 | Microwave, Hot air | B | A | A | B |
| Example 24 | Absent | M 3 | K18 | 13 | 5 | Microwave, Hot air | B | A | A | B |
| Example 25 | Absent | M 3 | K19 | 13 | 3 | Microwave, Hot air | B | A | A | B |
| Comparative Example 3 | Absent | M 3 | K 8 | 13 | 15 | Hot air | C | A | A | B |
| Comparative Example 4 | Absent | M 3 | K 8 | 13 | 15 | IR | B | C | A | B |
| Comparative Example 5 | Absent | M 3 | K 8 | 13 | 15 | Hot air IR | B | C | A | B |
| Comparative Example 6 | Absent | M 8 | K20 | 13 | 0 | Hot air | B | A | C | B |

*3: "$e''_{21}$" in the table is the value of e"2/e"1.
* 4: "D difference" in the table is the value of D1-D2 [%].
"Pr" in the table is a precoat liquid, "IR" is an infrared heater.

I. Summary

As can be seen from the above Table V, there is no evaluation of C (there is a problem in practical use) in the evaluation of Examples, and it can be seen that Examples are comprehensively superior to Comparative Examples, can achieve both high-speed drying and ejection stability of the ink, and form a high-quality image without damaging a base material.

Industrial Applicability

It is possible to provide an image forming method and an image forming system which can achieve both high-speed drying and ejection stability of an ink without damaging a base material.

Reference Signs List

1 recording apparatus
10 precoat liquid applying section
12 precoat liquid
20 ink applying section
21 first ink

22 second ink
30 ink drying section
35 drying apparatus
40 feeding roller
41 winding roller
121 nozzle plate
122 nozzle
123 ink channel (pressure chamber)
126a individual ink circulation path
126b common ink circulation path
F base material, recording medium
D conveyance direction of base material
H circulation type inkjet head
$H_w$, $H_Y$, $H_M$, $H_C$, $H_K$ inkjet head for ink application
$H_P$ inkjet head for precoat liquid application
$H_{Ag}$ inkjet head for applying metallic nanoparticle-containing ink
1S ink ejection face
h groove

**Claims**

1. An image forming method comprising an applying step and a drying step of an ink, wherein:

   the ink contains at least one or more of a pigment, inorganic particles, organic particles, and a resin, and water and a water-soluble solvent,
   the ink applying step is a step of ejecting and applying at least a first ink and a second ink onto a base material,
   at least one drying step of the drying step is a step of drying a coating film by irradiating it with microwaves,
   when complex dielectric constants of the first ink and the second ink at a drying rate of 95% are defined as $\varepsilon''1$ and $\varepsilon''2$, respectively, the $\varepsilon''1$ and $\varepsilon''2$ satisfy the following formula (1),

   $$\text{Formula (1): } \varepsilon''1 < \varepsilon''2$$

   and when the drying rates of the first ink and the second ink dried at 80°C for 20 seconds are defined as D1 and D2, respectively, the D1 and D2 satisfy the following formula (2),

   $$\text{Formula (2): } D2 < D1.$$

2. The image forming method according to claim 1, wherein the complex dielectric constant $\varepsilon''1$ of the first ink and the complex dielectric constant $\varepsilon''2$ of the second ink satisfy the following formula (3),

   $$\text{Formula (3): } (\varepsilon''2/\varepsilon''1) < 20.$$

3. The image forming method according to claim 1, wherein:

   the water-soluble solvent contains a moisturizer having a boiling point of 200°C or higher;
   the content of the moisturizer is in a range of 3% by mass to 20% by mass with respect to the first ink or the second ink, and
   when the first ink or the second ink is irradiated with the microwaves at a frequency 2.45 GHz, the complex dielectric constant $\varepsilon''$ at 25°C is in a range of 13 to 60.0.

4. The image forming method according to claim 3, wherein the content of the moisturizer is larger in the second ink than in the first ink.

5. The image forming method according to claim 1, wherein the ink contains a surfactant having a hydroxy group.

6. The image forming method according to claim 1, wherein the ink contains a surfactant having a diol structure.

7. The image forming method according to claim 1, wherein the base material is a resin film.

8. The image forming method according to claim 1, wherein:

in the applying step of the ink, an inkjet head having a water-repellent film is used, and
contact angles of the first ink and the second ink with respect to the water-repellent film are in a range of 60 to 80 at 25°C.

9. The image forming method according to claim 1, comprising an applying step of a precoat liquid before the applying step of the ink.

10. The image forming method according to claim 8, wherein the inkjet head comprises a nozzle circulation mechanism.

11. The image forming method according to claim 10, wherein the inkjet head comprises:

at least one pressure chamber into which an ink is injected;
a pressure generating unit which generates a pressure fluctuation of the pressure chamber;
a nozzle which communicates with the pressure chamber and serves as a channel of the ink ejected from the pressure chamber to the outside by the pressure fluctuation of the pressure chamber; and
a circulation path which communicates with the pressure chamber and discharges the ink inside the nozzle and returns the ink to an injection path to the pressure chamber,
and wherein there are two or more of the circulation paths.

12. The image forming method according to claim 1, wherein, in the drying step by irradiation with microwaves, applied matters of the first ink and the second ink are dried by blowing air at 100°C or lower.

13. An image forming system comprising an applying means and a drying means of an ink, wherein:

the ink contains at least one or more of a pigment, inorganic particles, organic particles, and a resin, and water and a water-soluble solvent;
the ink applying means ejects and applies at least a first ink and a second ink onto a base material;
at least one drying means of the drying means dries a coating film by irradiating it with microwaves;
when complex dielectric constants of the first ink and the second ink at a drying rate of 95% are defined as $\varepsilon''1$ and $\varepsilon''2$, respectively, the $\varepsilon''1$ and $\varepsilon''2$ satisfy the following formula (1),

$$\text{Formula (1): } \varepsilon''1 < \varepsilon''2$$

when the drying rates of the first ink and the second ink dried at 80°C for 20 seconds are defined as D1 and D2, respectively, the D1 and D2 satisfy the following formula (2),

$$\text{Formula (2): } D2 < D1.$$

# FIG. 1

# FIG. 2A

# FIG. 2B

# FIG. 3

# FIG. 4

## INTERNATIONAL SEARCH REPORT

| International application No. |
| --- |
| **PCT/JP2024/015692** |

**A. CLASSIFICATION OF SUBJECT MATTER**

*B41M 5/00*(2006.01)i; *B41J 2/01*(2006.01)i; *B41J 2/18*(2006.01)i; *C09D 11/322*(2014.01)i; *C09D 11/54*(2014.01)i
FI: B41M5/00 100; C09D11/322; C09D11/54; B41M5/00 120; B41M5/00 112; B41M5/00 132; B41J2/01 501; B41J2/01 127; B41J2/18; B41J2/01 125

According to International Patent Classification (IPC) or to both national classification and IPC

**B. FIELDS SEARCHED**

Minimum documentation searched (classification system followed by classification symbols)

B41M5/00; B41J2/01; B41J2/18; C09D11/322; C09D11/54

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2010-36455 A (FUJIFILM CORPORATION) 18 February 2010 (2010-02-18) paragraphs [0017]-[0307] | 1-9, 12-13 |
| Y | paragraphs [0017]-[0307] | 10-11 |
| Y | JP 2021-24150 A (SEIKO EPSON CORPORATION) 22 February 2021 (2021-02-22) paragraphs [0041]-[0059] | 10-11 |

☐ Further documents are listed in the continuation of Box C.  ☑ See patent family annex.

| | Special categories of cited documents: | | |
| --- | --- | --- | --- |
| * | | | |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 May 2024** | **02 July 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/015692**

| Patent document cited in search report | | | Publication date (day/month/year) | Patent family member(s) | Publication date (day/month/year) |
|---|---|---|---|---|---|
| JP | 2010-36455 | A | 18 February 2010 | US 2010/0033527 A1 paragraphs [0013]-[0462] | |
| JP | 2021-24150 | A | 22 February 2021 | US 2021/0031552 A1 paragraphs [0036]-[0070] | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H5278259 A
- JP 2022147052 A
- JP 2019151071 A
- JP S5774193 A
- JP S5787988 A
- JP S62261476 A
- JP S5774192 A
- JP S5787989 A
- JP S6072785 A
- JP S61146591 A

- JP H0195091 A
- JP H0313376 A
- JP S5942993 A
- JP S5952689 A
- JP S62280069 A
- JP S61242871 A
- JP H04219266 A
- JP 2018202768 A
- JP 2015074161 A
- JP 2017177578 A

**Non-patent literature cited in the description**

- Paper and Cardboard -Liquid Absorbency Test Method - Bristow Method. *JAPAN TAPPI Paper Pulp Test Methods*, 2000